(19) **Europäisches Patentamt / European Patent Office / Office européen des brevets**

(11) **EP 4 380 220 A1**

(12) **EUROPEAN PATENT APPLICATION**
published in accordance with Art. 153(4) EPC

(43) Date of publication:
**05.06.2024 Bulletin 2024/23**

(21) Application number: **22863345.9**

(22) Date of filing: **27.08.2022**

(51) International Patent Classification (IPC):
**H04W 24/02** (2009.01)  **H04L 5/00** (2006.01)
**H04L 25/08** (2006.01)

(52) Cooperative Patent Classification (CPC):
**H04L 5/00; H04L 25/08; H04W 24/02; H04W 72/23**

(86) International application number:
**PCT/CN2022/115331**

(87) International publication number:
**WO 2023/030209 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.09.2021 CN 202111022394**

(71) Applicant: **Huawei Technologies Co., Ltd.
Shenzhen, Guangdong 518129 (CN)**

(72) Inventors:
• **YU, Jian
Shenzhen, Guangdong 518129 (CN)**
• **SHAO, Jiafeng
Shenzhen, Guangdong 518129 (CN)**
• **LI, Yiran
Shenzhen, Guangdong 518129 (CN)**
• **ZHAO, Wenqi
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND COMMUNICATION APPARATUS**

(57) This application discloses a communication method and a communication apparatus. The method includes: A terminal device receives first indication information, where the first indication information indicates first configuration information of a first signal, and the first configuration information at least includes information about a first resource and a first antenna port number; the terminal device receives the first signal on the first resource and receives a second signal on a second resource, where a second antenna port number corresponding to the second signal is different from the first antenna port number, and the first resource and the second resource overlap; and the terminal device determines information in the second signal based on the first signal. In a possible design, the terminal device may determine, based on the first configuration information sent by a network device, a signal sequence carried by the first signal. In this way, even if the network device sends the first signal and the second signal on a same resource, the terminal device can determine the information in the second signal based on the first signal, to reduce interference caused by the first signal to the second signal and improve communication performance of the second signal.

FIG. 4

**Description**

**CROSS-REFERENCE TO RELATED APPLICATIONS**

This application claims priority to Chinese Patent Application No. 202111022394.7, filed with the China National Intellectual Property Administration on September 1, 2021 and entitled "COMMUNICATION METHOD AND COMMUNICATION APPARATUS", which is incorporated herein by reference in its entirety.

**TECHNICAL FIELD**

This application relates to the field of communication technologies, and in particular, to a communication method and a communication apparatus in an integrated sensing and communication system.

**BACKGROUND**

A network device may send, at different layers on a same time-frequency resource, a signal (for example, referred to as a first signal) for sensing a target and a signal (for example, referred to as a second signal) for communication. In this case, though the first signal does not occupy additional overheads of a communication system, it is an interfering signal against the second signal. This reduces performance of the second signal and causes a decrease in a throughput of the communication system. Therefore, how to reduce or cancel interference caused by the first signal to the second signal to improve communication performance of the second signal is a problem that needs to be urgently resolved.

**SUMMARY**

This application provides a communication method and a communication apparatus, to reduce interference caused by a first signal to a second signal and improve communication performance of the second signal.
According to a first aspect, a communication method is provided. The method may be performed by a first communication apparatus. The first communication apparatus may be a communication device or a communication apparatus, for example, a chip system, that can support the communication device in implementing a function required by the method. The following uses an example in which the communication device is a terminal device for description. The method includes:
The terminal device receives first indication information, receives a first signal on a first resource, and receives a second signal on a second resource. The terminal device determines information in the second signal based on the first signal. A first antenna port number corresponding to the first signal is different from a second antenna port number corresponding to the second signal. The first resource and the second resource overlap. The first indication information indicates first configuration information of the first signal, and the first configuration information includes at least information about the first resource and the first antenna port number. In this solution, a network device may send the first signal and the second signal on an overlapping resource of the first resource and the second resource. Because the first signal and the second signal are carried on a same resource, for the second signal, the first signal is an interfering signal of the second signal. To reduce interference caused by the first signal to the second signal, that is, to enable the terminal device to accurately determine the information in the second signal, the network device may notify the terminal device of configuration information (for example, the first configuration information) for sending the first signal. In this way, the terminal device may determine related information of the first signal based on the first configuration information. For example, the terminal device may determine, based on the first configuration information, a sequence carried by the first signal. Even if the network device sends the first signal and the second signal on a same resource, the terminal device can determine the information in the second signal from the received first signal and the received second signal based on the first signal, to reduce the interference caused by the first signal to the second signal and improve communication performance of the second signal. From this perspective, the first configuration information may be considered as configuration information for cancelling the interference caused by the first signal to the second signal.
Optionally, that the first resource and the second resource overlap includes that the first resource and the second resource partially overlap, or the first resource and the second resource completely overlap.
Optionally, the first resource includes a time domain resource and/or a frequency domain resource, and the second resource includes a time domain resource and/or a frequency domain resource.
In a possible implementation, the first configuration information further includes at least one of the following information: sequence information or power information corresponding to the first signal. The power information indicates a ratio of a transmit power of the second signal to a transmit power of the first signal on a same frequency domain resource unit. In this solution, the first configuration information may further include more information for reducing interference caused by the first signal to the second signal, to improve communication performance of the second signal as much as possible.

In a possible implementation, the frequency domain resource unit may be a subcarrier or a resource element (resource element, RE), or may be a physical resource block (physical resource block, PRB) or a resource block group (resource block group, RBG).

In a possible implementation, the first indication information includes a first index, and the first index corresponds to the first configuration information. In this solution, at least two sets of configuration information may be predefined, preconfigured, or configured by a network device. The first indication information includes an index of the first configuration information, to reduce resource overheads of the first indication information.

In a possible implementation, the method further includes: The terminal device receives second indication information from a network device, where the second indication information indicates at least two sets of configuration information, and the at least two sets of configuration information include the first configuration information. In this solution, the network device may dynamically configure the at least two sets of configuration information for the terminal device. This is more flexible.

In a possible implementation, the method further includes: The terminal device receives third indication information from the network device, where the third indication information indicates the terminal device to determine the information in the second signal based on the first signal. In this solution, the terminal device receives the third indication information, and determines to cancel interference caused by the first signal to the second signal. In one aspect, power consumption caused by an unnecessary interference cancellation operation performed by the terminal device can be reduced. In another aspect, the third indication information is indicated by the network device, so that regulation and control on the terminal device are more flexible.

In a possible implementation, the first indication information further includes a second index, and the second index indicates second configuration information. The second configuration information is configuration information of a third signal. The third signal and the first signal are from different cells, and a resource that carries the third signal and the second resource overlap. In this solution, the network device may configure a plurality of sets of configuration information for the terminal device. The plurality of sets of configuration information may correspond to different cells. Based on the plurality of sets of configuration information, the terminal device may cancel interference caused by a first signal from a same cell, or may cancel interference caused by a third signal from another cell.

In a possible implementation, different cells may correspond to a same network device; or different cells may correspond to different network devices. For example, a network device corresponding to the first signal is a first network device, and a network device corresponding to the third signal may be the first network device or a second network device.

In a possible implementation, the first indication information may be carried in downlink control information (downlink control information, DCI) and/or radio resource control (radio resource control, RRC).

In a possible implementation, the third indication information may be carried in the DCI.

According to a second aspect, a communication method is provided. The method may be performed by a second communication apparatus. The second communication apparatus may be a communication device, for example, a network device, or a communication apparatus, for example, a chip system, that can support the communication device in implementing a function required by the method. The following uses an example in which the communication device is the network device for description. The method includes:

The network device sends first indication information to a terminal device, sends a first signal on a first resource, and sends a second signal on a second resource. The first indication information indicates first configuration information of the first signal, and the first configuration information includes at least information about the first resource and a first antenna port number. The first resource and the second resource overlap, and a second antenna port number corresponding to the second signal is different from the first antenna port number.

In a possible implementation, the first configuration information further includes at least one of the following information: sequence information or power information corresponding to the first signal, where the power information indicates a ratio of a transmit power of the second signal to a transmit power of the first signal on a same frequency domain resource unit.

In a possible implementation, the first indication information includes a first index, and the first index corresponds to the first configuration information.

In a possible implementation, the method further includes: The network device sends second indication information to the terminal device, where the second indication information indicates at least two sets of configuration information, and the at least two sets of configuration information include the first configuration information.

In a possible implementation, the method further includes: The network device sends third indication information to the terminal device, where the third indication information indicates the terminal device to determine information in the second signal based on the first signal.

In a possible implementation, the first indication information further includes a second index. The second index indicates second configuration information, and the second configuration information is configuration information of a third signal. The third signal and the first signal are from different cells, and a resource that carries the third signal and the second resource overlap.

In a possible implementation, the first configuration information corresponds to different terminal devices.

In a possible implementation, after the network device sends the first signal and the second signal to the terminal device, the method further includes: receiving an echo signal of the first signal, where the echo signal is for sensing a target.

In a possible implementation, the first indication information is carried in DCI and/or RRC.

In a possible implementation, the third indication information is carried in the DCI.

For advantageous effects of the second aspect and the implementations of the second aspect, refer to the descriptions of the first aspect or the advantageous effects of the first aspect and the implementations of the first aspect.

According to a third aspect, an embodiment of this application provides a communication apparatus. The communication apparatus has a function of implementing behavior in the method embodiment of the first aspect. For advantageous effects, refer to the descriptions of the first aspect. Details are not described herein again. The communication apparatus may be a first terminal device in the first aspect, or the communication apparatus may be an apparatus, for example, a chip or a chip system, that can implement the method provided in the first aspect.

In a possible design, the communication apparatus includes a corresponding means (means) or module configured to perform the method in the first aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the first aspect. For details, refer to the detailed descriptions in the method example. Details are not described herein again.

According to a fourth aspect, an embodiment of this application provides a communication apparatus. The communication apparatus has a function of implementing behavior in the method embodiment of the second aspect. For advantageous effects, refer to the descriptions of the second aspect. Details are not described herein again. The communication apparatus may be the network device in the second aspect, or the communication apparatus may be an apparatus, for example, a chip or a chip system, that can support the network device in the second aspect in implementing a function required by the method provided in the second aspect.

In a possible design, the communication apparatus includes a corresponding means (means) or module configured to perform the method in the second aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the second aspect. For details, refer to the detailed descriptions in the method example. Details are not described herein again.

According to a fifth aspect, an embodiment of this application provides a communication apparatus. The communication apparatus may be the communication apparatus in the third aspect or the fourth aspect in the foregoing embodiment, or a chip or a chip system disposed in the communication apparatus in the third aspect or the fourth aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by a first terminal device in the foregoing method embodiments, or perform the method performed by the network device in the foregoing method embodiments.

According to a sixth aspect, an embodiment of this application provides a communication apparatus. The communication apparatus includes an input/output interface and a logic circuit. The input/output interface is configured to input and/or output information. The logic circuit is configured to perform the method in the first aspect, or the logic circuit is configured to perform the method in the second aspect.

According to a seventh aspect, an embodiment of this application provides a chip system. The chip system includes a processor, and may further include a memory and/or a communication interface, configured to implement the method in the first aspect or the second aspect. In a possible implementation, the chip system further includes the memory, configured to store a computer program. The chip system may include a chip, or may include a chip and another discrete component.

According to an eighth aspect, an embodiment of this application provides a communication system. The communication system includes the communication apparatus in the third aspect and the communication apparatus in the fourth aspect. Alternatively, the communication system includes the communication apparatus in the third aspect and the communication apparatus, in the fifth aspect, configured to perform the method in the second aspect. Alternatively, the communication system includes the communication apparatus in the fourth aspect and the communication apparatus, in the fifth aspect, configured to perform the method in the first aspect.

According to a ninth aspect, this application provides a computer-readable storage medium. The computer-readable storage medium stores a computer program. When the computer program is run, the method in the first aspect or the second aspect is implemented.

According to a tenth aspect, a computer program product is provided. The computer program product includes computer program code. When the computer program code is run, the method in the first aspect or the second aspect is enabled to be performed.

For advantageous effects of the third aspect to the tenth aspect and the implementations of the third aspect to the tenth aspect, refer to the descriptions of the first aspect or the advantageous effects of the first aspect and the implementations of the first aspect.

## BRIEF DESCRIPTION OF DRAWINGS

FIG. 1 is a schematic diagram of transmission of a sensing signal and a communication signal at different layers;

FIG. 2 is a schematic diagram of an example communication system to which an embodiment of this application is applicable;

FIG. 3A is a schematic diagram of a network architecture of a communication system to which an embodiment of this application is applicable;

FIG. 3B is a schematic diagram of another network architecture of a communication system to which an embodiment of this application is applicable;

FIG. 3C is a schematic diagram of still another network architecture of a communication system to which an embodiment of this application is applicable;

FIG. 4 is a schematic flowchart of a communication method according to an embodiment of this application;

FIG. 5 is a schematic flowchart of another communication method according to an embodiment of this application;

FIG. 6 is a schematic diagram of a symbol position of a first signal according to an embodiment of this application;

FIG. 7 is a schematic diagram of another symbol position of a first signal according to an embodiment of this application;

FIG. 8 is a schematic diagram of still another symbol position of a first signal according to an embodiment of this application;

FIG. 9 is a schematic diagram of a terminal device being interfered from different cells according to an embodiment of this application;

FIG. 10A is a schematic diagram of an implementation form of first indication information according to an embodiment of this application;

FIG. 10B is a schematic diagram of another implementation form of first indication information according to an embodiment of this application;

FIG. 10C is a schematic diagram of still another implementation form of first indication information according to an embodiment of this application;

FIG. 11 is a schematic diagram of a structure of a communication apparatus according to an embodiment of this application;

FIG. 12 is a schematic diagram of another structure of a communication apparatus according to an embodiment of this application;

FIG. 13 is a schematic diagram of a structure of a communication apparatus according to an embodiment of this application; and

FIG. 14 is a schematic diagram of a structure of another communication apparatus according to an embodiment of this application.

## DESCRIPTION OF EMBODIMENTS

To help a person skilled in the art understand the method provided in embodiments of this application, some terms in embodiments of this application are first explained and described.

(1) A terminal device is a device having a wireless transceiver function, and may send a signal to a network device, or receive a signal from a network device. The terminal device may be referred to as a user equipment (user equipment, UE), or sometimes may be referred to as a terminal, an access station, a UE station, a remote station, a wireless communication device, a user apparatus, or the like. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, and a robot. The terminal device in embodiments of this application may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a smart speaker in an IoT network, a wireless terminal device in telemedicine, a wireless terminal device in a smart grid, a wireless terminal device in transportation security, a wireless terminal device in a smart city, or a wireless terminal device in a smart home, or the like.

By way of example, and not limitation, in embodiments of this application, the terminal device may be alternatively a wearable device. The wearable device may also be referred to as a wearable intelligent device, an intelligent wearable device, or the like, and is a general name of wearable devices that are intelligently designed and developed for daily wear, for example, glasses, gloves, watches, clothes, and shoes, by using a wearable technology. Alternatively, the terminal device may be a sensor, for example, a train detector or a gas station sensor, configured to perform detection. The terminal device may further include a relay (relay). For example, the terminal device may be customer-premises equipment (customer-premises equipment, CPE). The CPE may receive a signal from the network device, and forward the signal to another terminal device. Alternatively, it is understood that any device that can perform data communication with a base station may be considered as the terminal device. If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In addition, in embodiments of this application, the terminal device may be an apparatus configured to implement a function of a terminal, or may be an apparatus, for example, a chip system, that can support the terminal device in implementing the function. The apparatus may be installed in the terminal device. For example, the terminal device may alternatively be a vehicle detector. In embodiments of this application, the chip system may include a chip, or may include a chip and another discrete component. In the technical solutions provided in embodiments of this application, an example in which the apparatus configured to implement the function of the terminal is the terminal device is for describing the technical solutions provided in embodiments of this application.

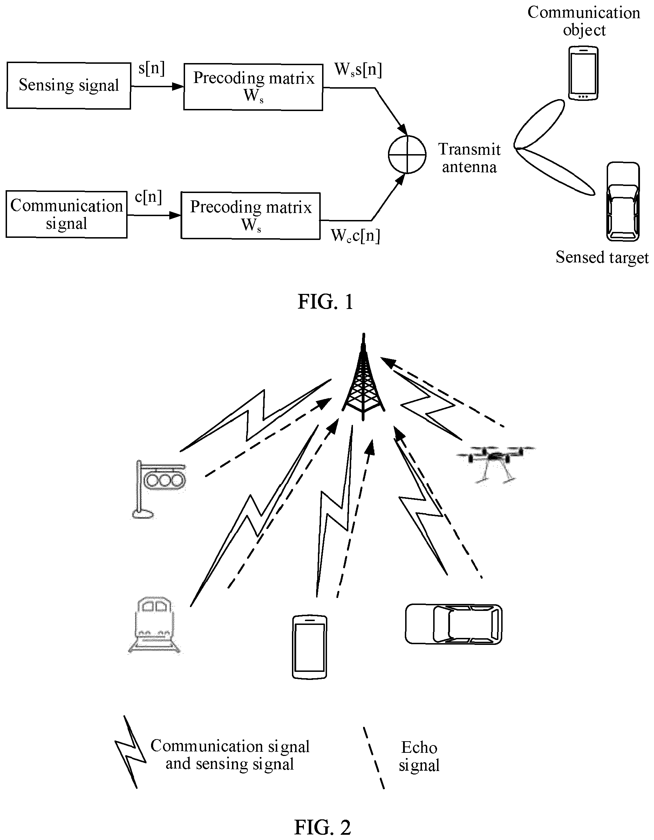

(2) A network device is an access device, for example, includes a radio access network (radio access network, RAN) device, for example, a base station (for example, an access point), used by a terminal device to access a mobile communication system in a wireless manner. The network device may alternatively be a device that communicates with a terminal through an air interface. The network device is another possible terminal apparatus in an example, or a roadside unit (roadside unit, RSU) in a V2X technology in another example. The base station may be configured to mutually convert a received over-the-air frame and an internet protocol (internet protocol, IP) packet and serve as a router between the terminal and a remaining part of the radio access network. The remaining part of the radio access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (evolved NodeB) in a long term evolution (long term evolution, LTE) system or a long term evolution-advanced (long term evolution-advanced, LTE-A) system (or which may be referred to as an eNB or an e-NodeB for short); or may include a next generation NodeB (next generation NodeB, gNB) in a 5G NR system, or may include an access node in a wireless fidelity (wireless fidelity, Wi-Fi) system. Alternatively, the network device may be a relay station, a vehicle-mounted device, a future evolved public land mobile network (Public Land Mobile Network, PLMN) device, a device in a device-to-device (device-to-device, D2D) network, a device in a machine-to-machine (machine-to-machine, M2M) network, a device in an IoT network, or the like. A specific technology and a specific device form that are used by a wireless network device are not limited in embodiments of this application. For example, a network device in FIG. 1 may be the base station, and corresponds to different devices in different systems. For example, the network device in FIG. 1 may correspond to the eNB in a 4th generation (4th generation, 4G) mobile communication technology system, and corresponds to the gNB in a 5G system.

The network device may further include a core network device. The core network device includes, for example, an access and mobility management function (access and mobility management function, AMF), a user plane function (user plane function, UPF), and the like. Because embodiments of this application mainly relate to an access network device, the network device below is an access network device unless otherwise specified.

In embodiments of this application, the network device in this application may alternatively be a device having a sensing function. The device may send a sensing signal, and receive and process an echo signal of a sensed target. An apparatus configured to implement a function of the network device may be a network device or may be an apparatus, for example, a chip system, that can support the network device in implementing the function. The apparatus may be installed in the network device. In the technical solutions provided in embodiments of this application, an example in which the apparatus configured to implement the function of the network device is the network device is for describing the technical solutions provided in embodiments of this application.

(3) A sensing device may also be referred to as a sensing apparatus, may also be referred to as a detector, or the like, or may be referred to as a device having a sensing function or a sensing capability. A working principle of the sensing device is to determine attribute information of a sensed target by sending a signal and receiving a feedback signal (which is also referred to as an echo signal) generated by the sent signal after the sensed target is reflected, transparently transmitted, scattered, and the like. For example, the information of the sensed target includes a speed, a distance, a shape, or a size. The sensed target is a tangible object that can be sensed on the ground, for example, a mountain, a forest, or a building. The sensed target may alternatively be a movable object, for example, a vehicle, an uncrewed aerial vehicle, a pedestrian, or a terminal device. In embodiments of this application, the sensing device may be an apparatus configured to implement the sensing function, or may be an apparatus, for example, a chip system, that can support the device in implementing the function. The chip system may be installed in the device. The sensing device may alternatively be a vehicle detector, a sensor in a gas station, or the like. In embodiments of this application, the sensed target is a target that can be sensed by a network device having the sensing function. The target may feed back an electromagnetic wave to the network device. The sensed target may also be referred to as a detected target, a sensed object, a detected object, a sensed device, or the like. This is not limited in embodiments of this application.

(4) A sensing signal is for sensing a signal of a sensed target (or referred to as a target object). The sensing signal is also referred to as a sounding signal, a radar signal, a radar sensing signal, a radar sounding signal, an environment sensing signal, or the like. The sensing signal may be a pulse signal, or may be a signal, for example, a sounding reference signal (sounding reference signal, SRS), a demodulation reference signal (demodulation reference signal, DMRS), or a channel state information reference signal (channel state information reference signal, CSI-RS), in a wireless communication system. Compared with the sensing signal, a signal communicated between a network device and a terminal device may be considered as a communication signal, for example, a signal carried on a downlink physical shared channel (physical downlink shared channel, PDSCH), the DMRS, and the CSI-RS.

(5) A resource includes a time domain resource and a frequency domain resource, and may be considered as a resource pair formed by the time domain resource and the frequency domain resource. The time domain resource is a symbol occupied in time domain. A minimum granularity of the time domain resource is not limited in embodiments of this application. For example, the minimum granularity of the time domain resource is one orthogonal frequency division modulation (orthogonal frequency division modulation, OFDM) symbol, or may be a mini-slot (mini-slot), a slot (slot), or the like. One mini-slot may include two or more OFDM symbols, and one slot includes 14 OFDM symbols. The frequency domain resource is a frequency resource occupied in frequency domain. A minimum granularity of the frequency domain resource may be one subcarrier or a resource element (resource element, RE), or may be a physical resource block (physical resource block, PRB), a resource block group (resource block group, RBG), or the like. One PRB includes 12 REs in frequency domain, and one RBG may include two PRBs, four PRBs, eight PRBs, or 16 PRBs.

(6) Transmission at different layers means that different signals are sent on a same time-frequency resource, but antenna port numbers (which may also be considered as antenna port number indexes) used in different signals are different. For example, the first signal and the second signal are sent on a same time-frequency resource, but an antenna port number for sending the first signal is different from an antenna port number for sending the second signal. It may also be considered that a first signal and a second signal are transmitted at different layers in space domain.

(7) The terms "system" and "network" in embodiments of this application may be interchangeably used. "At least one" means one or more, and "a plurality of" means two or more than two. "And/or" describes an association relationship between associated objects, and represents that three relationships may exist. For example, A and/or B may represent the following cases: A exists alone, both A and B exist, and B exists alone, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one (piece) of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit a sequence, a time sequence, a priority, or an importance degree of the plurality of objects. For example, a first signal and a second signal are only for distinguishing different signals, and are not for indicating different priorities, different importance degrees, or the like of the two types of signals.

The foregoing describes some terms in embodiments of this application. The following describes technical features in embodiments of this application.

A sensing device, for example, a radar, may sense an environment around a target object. Therefore, the sensing device is widely used in various monitoring (or detection) fields. For example, the radar may be used in air and ground traffic monitoring, weather monitoring, security monitoring, electromagnetic imaging, and the like. For example, the radar may be configured to monitor an uncrewed aerial vehicle in the air, or may monitor a vehicle speed, whether a vehicle occupies an emergency lane, an illegal lane change of a vehicle, or the like. However, as a detection requirement increases, more radars need to be deployed. This causes high costs. In addition, radars are densely deployed, and interference between the radars is large. In view of advantages of large-scale deployment and wide coverage areas of network devices in an LTE network or an NR network, sensing and communication may be designed in an integrated manner. For example, a network device with a sensing function may be designed. The network device may send a sensing signal, and may send a communication signal. Alternatively, a signal sent by the network device may be for communication and sensing. In this specification, a system in which sensing and communication are designed in an integrated manner is referred to as an integrated sensing and communication system.

In the integrated sensing and communication system, the sensing signal and the communication signal may be transmitted on a same time domain resource, and are transmitted at different layers on frequency domain resources that completely or partially overlap. In this case, although the sensing signal does not occupy additional overheads of a communication system, for the communication signal, the sensing signal is an interfering signal of the communication signal. It is considered that the sensing signal causes interference to the communication signal. This reduces communication performance of the communication signal, for example, decreases a signal to interference plus noise ratio of the communication signal, and causes a decrease in a throughput of the communication system.

For example, FIG. 1 is a schematic diagram of transmission of a sensing signal and a communication signal at different layers. The sensing signal is sent to a sensed target, and the communication signal is sent to a terminal device. The sensing signal and the communication signal are sent on a same time-frequency resource, but a precoding matrix for sending the sensing signal is different from a precoding matrix for sending the communication signal. In FIG. 1, $c[n]$ is the communication signal, $s[n]$ is the sensing signal, $W_c$ is the precoding matrix for sending the communication signal, and $W_s$ is the precoding matrix for sending the sensing signal. The communication signal and the sensing signal are superposed after being precoded, and are sent from different antenna ports. A signal $r[n]$ received by the terminal device satisfies the following: $r[n] = HW_c c[n] + HW_s s[n] + v[n]$, where H is a channel between a network device and the terminal device, $v[n]$ is a noise, and n is a subcarrier index. It may be understood that for the terminal device, $s[n]$ is an interfering signal. This reduces performance of $c[n]$.

To increase a signal to interference plus noise ratio of the communication signal, the terminal device may use $s[n]$ as a reference signal to estimate HWs, to remove $HW_s s[n]$ from $r[n]$, that is, cancel interference. It may be understood that the network device indicates, to the terminal device, an antenna port number for receiving the communication signal, and the terminal device determines, based on information such as the antenna port number and a scrambling code that corresponds to the communication signal and that is configured by using higher layer signaling, a reference signal sequence included in the communication signal. It may be understood that the communication signal includes a signal carried on a PDSCH and a DMRS for PDSCH demodulation. The terminal device performs channel estimation based on the antenna port number, a quantity of transport layers of the terminal device, a time-frequency resource (including a time domain resource and a frequency domain resource) for sending the communication signal, and the like. Because the terminal device knows information such as the antenna port number and the time-frequency resource of the communication signal, and does not know information such as an antenna port number, a time-frequency resource, and a sequence of the sensing signal, the terminal device fails to estimate HWs, and fails to cancel interference caused by the sensing signal to the communication signal. Similarly, the terminal device does not know a reference signal transmitted by another cell, and fails to estimate channel interference from the another cell. Consequently, the terminal device fails to cancel interference caused by a sensing signal from the another cell.

In view of this, embodiments of this application provide a communication method. In the method, a network device may notify a terminal device of configuration information for sending a sensing signal. In this way, the terminal device may determine related information of the sensing signal based on the configuration information, for example, may estimate channel-related information such as the foregoing HWs for sending the sensing signal, and may determine information in a communication signal. In other words, interference caused by the sensing signal to the communication signal is cancelled, and performance of the communication signal is improved.

The solutions provided in embodiments of this application may be applied to an integrated sensing and communication system. For example, FIG. 2 is a schematic diagram of a system architecture to which an embodiment of this application is applicable. The foregoing application scenario may be self-driving, autonomous driving, intelligent driving, connected driving, or the like. A system shown in FIG. 2 includes a network device, a terminal device, and a sensed target. The sensed target may be a motor vehicle (for example, an unmanned vehicle, an intelligent vehicle, an electric vehicle, or a digital vehicle), an uncrewed aerial vehicle, a rail car, a bicycle, a speed measuring apparatus, the terminal device, or the like. The network device has a sensing capability. To be specific, the network device may send a communication signal, and may send a sensing signal. After sending the sensing signal, the network device may receive an echo signal of the sensed target for the sensing signal, to estimate some attributes of the sensed target. An example in which the sensed target is the motor vehicle is used. The network device may sense attributes such as a speed, a distance, and a shape of the motor vehicle based on the received echo signal.

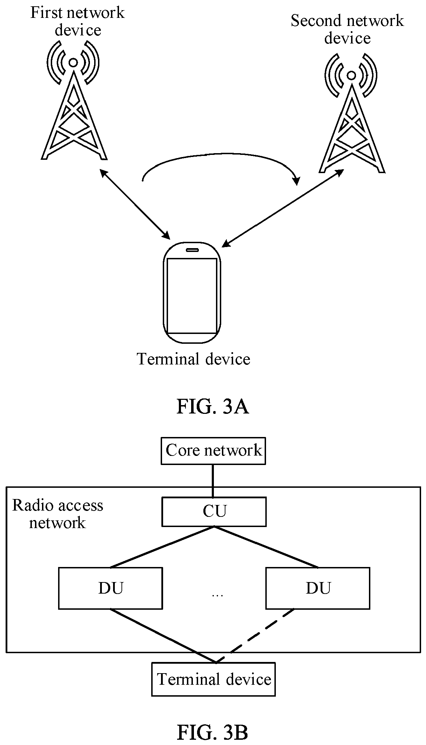

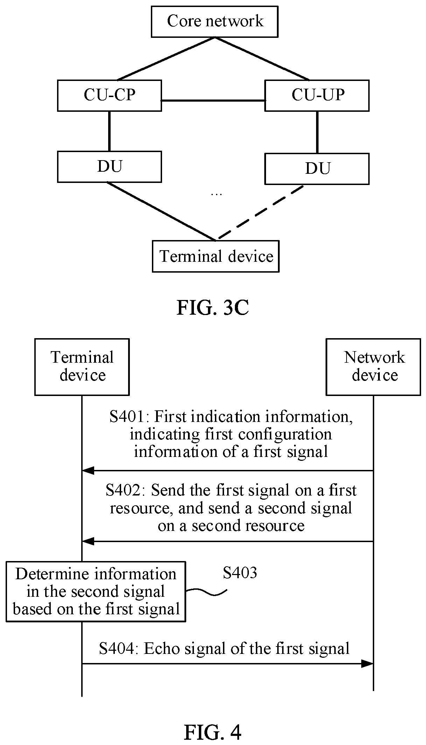

FIG. 3A shows a communication network architecture in a communication system according to this application. All subsequently provided embodiments shown in FIG. 4 are applicable to the architecture. A first network device is a source network device (or referred to as a working network device or a serving network device) of a terminal device (where a UE is used as an example for description subsequently). A second network device is a target network device (or referred to as a standby network device) of the UE, that is, a network device that serves the UE after switching. It should be noted that in this application, a "fault" may be understood as that the network device is faulty, and/or fails to serve one or more UEs due to another reason. This is referred to as the fault for short. The "switching" in this application refers to switching of the network device that serves the UE, and is not limited to "cell switching". For ease of description, an example in which the network device is a base station is for description. The "switching" may refer to switching caused by a change of a base station that serves the UE. For example, when a source base station of the UE is faulty, a standby base station serves the UE. For another example, when the UE switches from a source base station to another base station for communication, a switched-to target base station serves the UE. Cells that the UE accesses before and after the switching may be changed, or may be unchanged. It may be understood that the standby network device is a relative concept. For example, for one UE, a base station 2 is a standby network device of a base station 1, and for another UE, the base station 1 is a standby network device of the base station 2.

The first network device and the second network device may be two different devices. For example, the first network device and the second network device are two different base stations. Optionally, the first network device and the second network device may alternatively be two sets of functional modules in a same device. The functional module may be a hardware module, a software module, or a combination of the hardware module and the software module. For example, the first network device and the second network device are located in a same base station, and are two different functional modules in the base station. In an implementation, the first network device and the second network device are not transparent to the UE. When interacting with a corresponding network device, the UE can know the network device that the UE is interacting with. In another implementation, the first network device and the second network device are transparent to the UE. The UE can communicate with the network device, but does not know that the UE is interacting with which one of the two network devices. In other words, the UE may consider that only one network device exits. In FIG. 3A, the first network device and the second network device are located in one dashed-line box, and it indicates that the first network device and the second network device may not be transparent to the UE, or may be transparent to the UE. In subsequent descriptions, the first network device, the second network device, and the terminal device (where the UE is used as an example) may be respectively the first network device, the second network device, and the UE in the network architecture shown in FIG. 3A. In the accompanying drawings corresponding to embodiments of this application, steps represented by dashed lines are optional steps. Details are not described below.

FIG. 3B shows another communication network architecture in a communication system according to this application. As shown in FIG. 3B, the communication system includes a CN and a RAN. A network device (for example, a base station) in the RAN includes a baseband apparatus and a radio frequency apparatus. The baseband apparatus may be implemented by one or more nodes. The radio frequency apparatus may be remotely and independently implemented from the baseband apparatus, may be integrated into the baseband apparatus, or may be partially remotely implemented from and partially integrated into the baseband apparatus. The network device in the RAN may include a central unit (central unit, CU) and a distributed unit (distributed unit, DU). A plurality of DUs may be controlled by one CU in a centralized manner. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such protocol layer division is only an example, and there may be division of another protocol layer. The radio frequency apparatus may be remotely deployed and not placed in the DU, or may be integrated into the DU, or may be partially remotely disposed and partially integrated into the DU. This is not limited in embodiments of this application.

FIG. 3C shows another communication network architecture in a communication system according to this application. Compared with the architecture shown in FIG. 3B, a control plane (control plane, CP) and a user plane (user plane, UP) of the CU may be separated and divided into different entities for implementation. The different entities are respectively a control plane CU entity (a CU-CP entity) and a user plane CU entity (a CU-UP entity). In the network architecture, signaling generated by the CU may be sent to a terminal device through the DU, or signaling generated by a UE may be sent to the CU through the DU. The DU may transparently transmit the signaling to the UE or the CU by directly encapsulating the signaling at a protocol layer without parsing the signaling. In the network architecture, the CU is divided as a network device on a radio access network side. In addition, the CU may be divided as a network device on a core network side. This is not limited in this application.

The following describes in detail the solutions provided in embodiments of this application with reference to the accompanying drawings. In the following description process, an example in which the method is applied to the system shown in FIG. 2 is used. In addition, the method may be performed by two communication apparatuses. The two communication apparatuses are, for example, a first communication apparatus and a second communication apparatus. The first communication apparatus may be a terminal device or a communication apparatus that can support a terminal device in implementing a function required by the method. Certainly, the first communication apparatus may alternatively be another communication apparatus, for example, a chip system. The second communication apparatus may be a network device or a communication apparatus that can support a network device in implementing a function required by the method. Certainly, the second communication apparatus may alternatively be another communication apparatus, for example, a chip system. Implementations of the first communication apparatus and the second communication apparatus are not limited. For example, the first communication apparatus may be the terminal device, and the second communication apparatus is the network device. Alternatively, the first communication apparatus is the communication apparatus that can support the terminal device in implementing the function required by the method, and the second communication apparatus is the network device.

For ease of description, an example in which the method is performed by the terminal device and the network device is used below. To be specific, an example in which the first communication apparatus is the terminal device, and the second communication apparatus is the network device is used. If this embodiment is applied to the network architecture shown in FIG. 2, the terminal device described below may be the terminal device in the network architecture shown in FIG. 2. The network device may be the network device in the network architecture shown in FIG. 2.

FIG. 4 is a schematic flowchart of a communication method according to an embodiment of this application. An example in which a network device transmits a first signal and a second signal to a terminal device at different layers on a same time domain resource is used in FIG. 4. The first signal may be for sensing a target, and the second signal may be for communication. Specific names of the first signal and the second signal are not limited in embodiments of this application. For example, the first signal may be the foregoing sensing signal, and the second signal may be the foregoing communication signal. In this specification, a resource for sending the first signal is referred to as a first resource, and an antenna port number for sending the first signal is referred to as a first antenna port number. A resource for sending the second signal is referred to as a second resource, and an antenna port number for sending the first signal is referred to as a second antenna port number.

S401: The network device sends first indication information to the terminal device, and correspondingly, the terminal device receives the first indication information from the network device. The first indication information indicates first configuration information of the first signal.

S402: The network device sends the first signal on the first resource, and sends the second signal on the second resource, and correspondingly, the terminal device receives the first signal on the first resource, and receives the second signal on the second resource.

The network device may send the first signal to the terminal device on the first resource, and send the second signal to the terminal device on the second resource. The first resource and the second resource overlap. An antenna port number (namely, the second antenna port number) corresponding to the second signal is different from an antenna port number (namely, the first antenna port number) corresponding to the first signal. In other words, the network device sends the first signal and the second signal to the terminal device on the same time domain resource by using different antenna port numbers, that is, transmits the signals at different layers. It may be understood that the first antenna port number corresponding to the first signal refers to sending the first signal by using the first antenna port number. Similarly, the second antenna port number corresponding to the first signal refers to sending the second signal by using the second antenna port number.

When sending the first signal, the network device configures some information for sending the first signal, for example, information about the first resource for sending the first signal. Similarly, when sending the second signal, the network device also configures some information for sending the second signal, for example, information about the second resource. The network device sends the first signal and the second signal to the terminal device through transmission at different layers. For the terminal device, the first signal may be considered as an interfering signal of the second signal. To enable the terminal device to cancel interference caused by the first signal to the second signal, in this embodiment of this application, the network device may notify the terminal device of the some information for sending the first signal. The terminal device may estimate, based on the some information, a channel that carries the first signal, that is, estimate HWs in FIG. 1, to obtain the second signal through demodulation from the received first signal and the received second signal, and cancel the interference caused by the first signal to the second signal.

For example, the network device may send the first indication information to the terminal device, where the first indication information may indicate configuration information (referred to as the first configuration information in this specification) of the first signal. The first configuration information may include information such as the information about the first resource and the first antenna port number. The terminal device may determine, based on the first configuration information, to receive the first signal on the first resource, and may further estimate, based on the information about the first resource and the first antenna port number, the channel that carries the first signal, to cancel the interference caused by the first signal to the second signal. It may also be considered that the first configuration information is information for cancelling the interference caused by the first signal to the second signal.

It may be understood that the terminal device needs to estimate, based on the antenna port number for receiving the first signal, the first resource, sequence information corresponding to the first signal, and the like, the channel that carries the first signal. The sequence information corresponding to the first signal may include a sequence type of the first signal, scrambling code information of a sequence of the first signal, a base sequence index, a cyclic shift factor index, and the like. If the sequence information corresponding to the first signal is predefined or preconfigured, the first configuration information may not include the sequence information corresponding to the first signal. The first configuration information may further include other information for cancelling the interference caused by the first signal to the second signal. For example, the first configuration information may further include power information and the like. The power information may indicate a ratio of a transmit power of the second signal to a transmit power of the first signal on a same frequency domain resource unit. If the first configuration information does not include the power information, it may be considered by default that the ratio of the transmit power of the second signal to the transmit power of the first signal on the same frequency domain resource unit is 1 or another predefined value. It should be noted that a granularity of the frequency domain resource unit is not limited in embodiments of this application. For example, one frequency domain resource unit may be one RE, one PRB, one RBG, one RB, or the like.

The information about the first resource includes time domain resource information of the first signal and frequency domain resource information of the first signal. The time domain resource information of the first signal may indicate a time domain resource position for sending the first signal. The frequency domain resource information of the first signal indicates a frequency domain resource position for sending the first signal. The following describes the time domain resource information of the first signal and the frequency domain resource position of the first signal with reference to Example a1 and Example a2.

Example a1: The time domain resource information of the first signal may indicate the time domain resource position for sending the first signal. For example, the time domain resource information of the first signal may include at least one of the following information: time domain position information, a slot offset, a periodicity of the first signal, or first duration. The time domain position information may indicate a symbol position at which the first signal is sent in a period of time (for example, in one or more slots). The periodicity of the first signal indicates a time interval between two adjacent times of sending the first signal. For example, the periodicity of the first signal indicates that the first signal is sent once at an interval of M slots. The slot offset may indicate a start position for sending the first signal. For example, the slot offset indicates a slot from which the first signal is sent. It may be understood that the start position of the first signal may satisfy one of the following formulas: X mod T = 0; X mod T = offset; and (X + offset) mod T = 0, where X is a slot number or a slot index, offset is the slot offset, and T is the periodicity of the first signal. The first duration indicates duration for sending the first signal. For example, the first duration indicates duration for sending the first signal each time.

In a possible implementation, the time domain position information is implemented in the following two manners.

Manner 1: The time domain position information may be a bitmap (bitmap). To be specific, the bitmap may indicate a symbol position occupied by the first signal in a period of time. For example, the bitmap may indicate a symbol position occupied by the first signal in one slot. For example, if a value of a bit is "1", it indicates that a corresponding symbol is for sending the first signal. On the contrary, if a value of a bit is "0", it indicates that a corresponding symbol is for sending the first signal. For example, "00000010000001" indicates that symbols whose indexes are 6 and 13 in 14 symbols in one slot are for sending the first signal. One slot may correspond to one bitmap. Symbols for sending the first signal in different slots may be the same, or may be different. For example, "0000001000000100000000100001" indicates that symbols whose indexes are 6 and 13 in the 1st slot and symbols whose indexes are 8 and 13 in the 2nd slot in symbols in the two slots are for sending the first signal. The time domain resource information of the first signal may include a bitmap corresponding to one or more slots.

Manner 2: A plurality of time domain patterns for sending the first signal may be predefined. It may be understood that a time domain pattern for sending the first signal is a pattern formed by the time domain resource position for sending the first signal. In this case, the time domain position information may include an index corresponding to a time domain pattern. For example, Table 1 is a table of a correspondence between a time domain pattern and an index.

**Table 1**

| Index | Time domain pattern | Description |
|---|---|---|
| 1 | 00000010000001 | Symbols whose indexes are 6 and 13 in 14 symbols in one slot are for sending the first signal |
| 2 | 00000000100001 | Symbols whose indexes are 8 and 13 in the 14 symbols in one slot are for sending the first signal |
| 3 | 0000001000000100000000100001 | Symbols whose indexes are 6 and 13 in the 1st slot and symbols whose indexes are 8 and 13 in the 2nd slot in symbols in the two slots are for sending the first signal |
| ... | ... | ... |

The terminal device may determine, based on the correspondence shown in Table 1 and an index included in time domain information, the time domain pattern for sending the first signal. It should be noted that values and quantities of the indexes, the time domain patterns, and the like in Table 1 are only examples. A size of Table 1 and a specific form of the time domain pattern in Table 1 are not limited in embodiments of this application. In addition, a correspondence similar to the correspondence between a time domain pattern and an index in Table 1 may be predefined, may be preconfigured, or may be configured by the network device. This is not limited in embodiments of this application.

In Example a1, the terminal device may determine, based on the time domain resource information of the first signal, the time domain resource position for sending the first signal. For example, the terminal device may determine, based on the slot offset offset and the periodicity T of the first signal, the start position for sending the first signal each time, determine, based on the start position of the first signal and the first duration, duration for sending the first signal each time, and determine, based on the time domain position information, a specific time domain position for sending the first signal in the duration for sending the first signal each time.

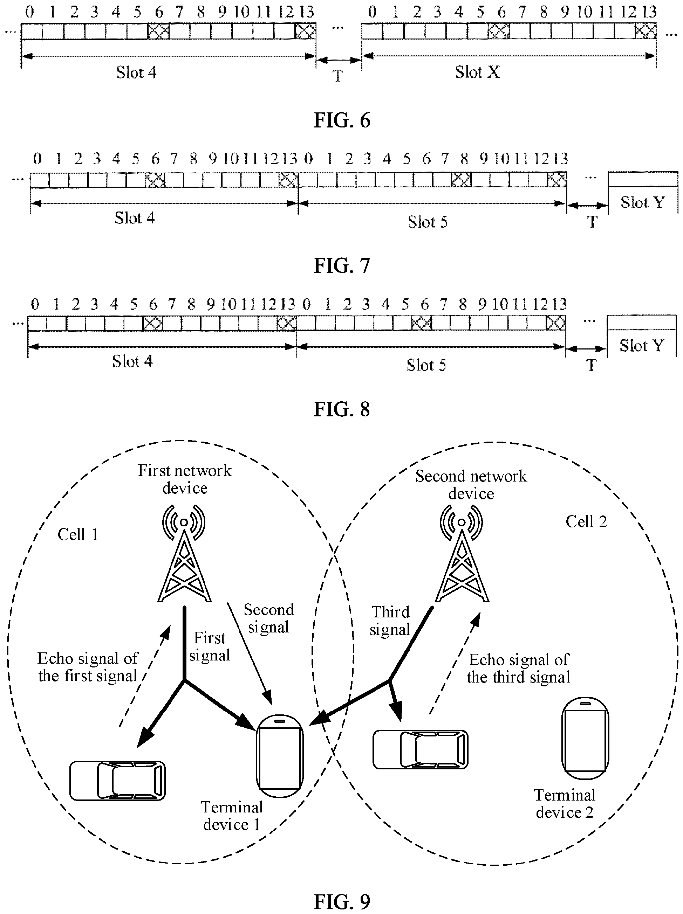

For example, a time domain resource of the first signal includes the slot offset, the periodicity of the first signal, and the time domain position information. Correspondingly, the terminal device determines, based on the slot offset and the periodicity of the first signal, the start position for sending the first signal, and determines, based on a symbol position for sending the first signal in a period of time, a symbol position for sending the first signal in each slot to send the first signal. For example, the start position is a slot whose number is 4, the periodicity is T, the symbol position for sending the first signal in each slot may be the time domain pattern indicated by the index 1 or the index 2 in Table 1, and the duration of the first signal is one slot. An example in which the symbol position for sending the first signal in each slot may be the time domain pattern indicated by the index 1 in Table 1 is used. In this case, it may be determined that the symbol positions of the first signal are symbols whose indexes are 6 and 13 in 14 symbols in a slot that appears at an interval of T starting from the slot whose number is 4. As shown in FIG. 6, an example in which an interval between the slot 4 and a slot X is T is used in FIG. 6. In FIG. 6, a symbol number of one slot starts from 0, and a shadow part is a symbol occupied by the first signal in the slot. For another example, the start position is a slot whose number is 4, the periodicity is T, and the duration of the first signal is two slots. A symbol position for sending the first signal in each slot may be the time domain pattern indicated by the index 1 or the index 2 in Table 1. Alternatively, symbol positions for sending the first signal in the two slots may be the time domain pattern indicated by the index 3 in Table 1. An example in which the symbol positions for sending the first signal in the two slots may be the time domain pattern indicated by the index 3 in Table 1 is used. In this case, it may be determined that the symbol positions of the first signal are symbols whose indexes are 6 and 13 in the 1st slot and symbols whose indexes are 8 and 13 in the 2nd slot in two slots that appear at an interval of T starting from the slot whose number is 4. As shown in FIG. 7, an example in which an interval between a slot 5 and a slot Y is T is used in FIG. 7. In FIG. 7, a symbol number of one slot starts from 0, and a shadow part is a symbol occupied by the first signal in the slot. An example in which the symbol positions for sending the first signal in the two slots may be the time domain pattern indicated by the index 1 in Table 1 is used. In this case, it may be determined that the symbol positions of the first signal are symbols whose indexes are 6 and 13 in the 1st slot and symbols whose indexes are 6 and 13 in the 2nd slot in two slots that appear at an interval of T starting from the slot whose number is 4. As shown in FIG. 8, an example in which an interval between a slot 5 and a slot Y is T is used in FIG. 8. In FIG. 8, a symbol number of one slot starts from 0, and a shadow part is a symbol occupied by the first signal in the slot. It should be noted that FIG. 6 to FIG. 8 are only examples. A number of a start slot of the first signal, T, and a symbol position occupied by the first signal in each slot are not limited in embodiments of this application.

Example a2: The frequency domain resource information of the first signal may indicate the frequency domain resource position for sending the first signal. For example, the frequency domain resource information of the first signal may include at least one of the following information: a frequency domain start position for sending the first signal, bandwidth information for sending the first signal, a frequency domain interval of the first signal, and a frequency domain resource unit occupied by the first signal in bandwidth. The frequency domain start position for sending the first signal may include an index of a start frequency domain resource unit. The bandwidth information of the first signal may include a total bandwidth value occupied by the first signal. Alternatively, the bandwidth information of the first signal may include an index of the frequency domain resource unit occupied by the first signal. The frequency domain resource unit may be an RB, an RBG, or the like. Alternatively, the bandwidth information of the first signal may include an index of the 1st RB occupied by the first signal and a quantity of occupied RBs. The frequency domain interval of the first signal indicates a frequency interval between two adjacent times of sending the first signal. For example, the frequency domain interval of the first signal indicates that the first signal is sent once at an interval of N frequency domain resource units. The terminal device may determine, based on the index of the start frequency domain resource unit and the frequency domain interval of the first signal, a frequency domain start position for sending the first signal each time, determine, based on the bandwidth information of the first signal, bandwidth for sending the first signal, and determine, based on the frequency domain resource unit occupied by the first signal, a frequency domain resource position of the first signal in the bandwidth for sending the first signal.

In a possible implementation, a plurality of frequency domain patterns for sending the first signal may be predefined. It may be understood that the frequency domain pattern for sending the first signal is a pattern formed by the frequency domain resource unit occupied by the first signal. In this case, similar to the time domain position information of the first signal, the frequency domain resource information of the first signal may include an index of a frequency domain pattern. The terminal device may determine, based on a correspondence between a frequency domain pattern and an index, and the index included in the frequency domain resource information of the first signal, the frequency domain pattern for sending the first signal, that is, the frequency domain resource unit occupied by the first signal. It should be noted that the correspondence between a frequency domain pattern and an index may be predefined, may be preconfigured, or may be configured by the network device. This is not limited in embodiments of this application.

The sequence of the first signal may be a pseudo-random sequence, a gold sequence, or a (Zadoff-Chu, ZC) sequence. The sequence of the first signal may be predefined, or may be indicated by the network device. The sequence information corresponding to the first signal may be considered as information for generating the sequence of the first signal. If the sequence of the first signal is the pseudo-random sequence or the gold sequence, the sequence information corresponding to the first signal may include the scrambling code information such as a scrambling code ID, of the sequence of the first signal. In other words, the sequence of the first signal is the pseudo-random sequence or the gold sequence, and the first configuration information further includes the scrambling code information of the sequence of the first signal. If the sequence of the first signal is the ZC sequence, the sequence information corresponding to the first signal may include one or more of a base sequence group index, the base sequence index (that is, an index of a base sequence in a base sequence group), a cyclic shift factor, and the like. In other words, the sequence of the first signal is the ZC sequence, and the first configuration information further includes one or more of the base sequence group index, the base sequence index (that is, the index of the base sequence in the base sequence group), the cyclic shift factor, and the like.

The power information of the first signal may be the ratio of the transmit power of the second signal to the transmit power of the first signal on the same frequency domain resource unit, or may be an index. For example, a set of ratios of the transmit power of the second signal to the transmit power of the first signal on the same frequency domain resource unit may be predefined, preconfigured, or configured by the network device. The power information of the first signal may be an index of an element in the set.

The first signal may be an SRS or a DMRS, or may be a CSI-RS. The first configuration information is implemented in different forms based on different first signals. The following describes implementation forms of the first configuration information by using an example in which the first signal is the DMRS or the CSI-RS.

For example, the first signal is the DMRS. The first configuration information may include one or more of the first antenna port number, the information about the first resource, sequence information of the DMRS, or the power information. The information about the first resource may include time domain resource information of the DMRS and/or frequency domain resource information of the DMRS.

The time domain resource information of the DMRS may include an index of a slot for sending the DMRS, an index of an OFDM symbol for sending the DMRS in one slot, or the like. For example, the time domain resource information of the DMRS may include an OFDM symbol 6 and an OFDM symbol 12. In other words, the DMRS is sent on the OFDM symbols whose indexes are 6 and 12. The frequency domain resource information of the DMRS may include bandwidth information of the DMRS and/or frequency domain pattern information of the DMRS. For example, the bandwidth information of the DMRS includes a start physical resource block (physical resource block, PRB) index of the DMRS and a quantity of PRBs. Alternatively, the bandwidth information of the DMRS includes a start PRB index and an end PRB index of bandwidth of the DMRS. Alternatively, the bandwidth information of the DMRS includes a length of bandwidth of the DMRS, that is, a quantity of PRBs. Alternatively, the bandwidth information of the DMRS includes an index of an RB or an RBG occupied by the DMRS. It may be understood that DMRSs in NR are classified into a Type 1 DMRS and a Type 2 DMRS. Frequency domain of the Type 1 DMRS is mapped at an equal interval, and the interval is one RE. In this way, a frequency domain pattern (pattern) of the Type 1 DMRS may form a repeated waveform in time domain. This helps avoid interference between adjacent symbols generated when an echo signal is received. Therefore, the Type 1 DMRS is applicable to sensing and may serve as the first signal. Therefore, when the first configuration information does not include the frequency domain pattern information of the DMRS, it may be considered by default that a frequency domain resource of the first resource is a frequency domain resource indicated by the frequency domain pattern of the Type 1 DMRS.

The sequence information of the DMRS may include sequence type information of the DMRS and scrambling code information for generating a sequence of the DMRS. For example, the first configuration information may include 1-bit information to indicate a sequence type of the DMRS. For example, the 1-bit information may indicate the gold sequence or the ZC sequence. If the 1-bit information indicates the gold sequence, the first configuration information further includes scrambling code information for generating the gold sequence. If the 1-bit information indicates the ZC sequence, the first configuration information further includes the base sequence group index, the base sequence index (that is, the index of the base sequence in the base sequence group), the cyclic shift factor, and the like. Alternatively, the first configuration information may include some parameters for indicating a sequence type of the DMRS. The terminal device may determine the sequence type of the DMRS based on these parameters. For example, the first configuration information may include the base sequence group index, the base sequence index (that is, the index of the base sequence in the base sequence group), the cyclic shift factor, and the like. The terminal device may determine, based on these parameters, that the sequence of the DMRS is the ZC sequence. It may be understood that in downlink transmission of NR, the DMRS is for generating the sequence of the DMRS based on the gold sequence, and in uplink transmission of NR, whether to generate the sequence of the DMRS based on the gold sequence or the ZC sequence may be selected based on a configuration of the network device. If the first configuration information does not include the sequence type information of the DMRS, it may be considered that the sequence of the DMRS is the gold sequence.

For example, the first signal is the CSI-RS. The first configuration information may include an existing configuration parameter of the CSI-RS, for example, one or more of a time-frequency resource mapping configuration of the CSI-RS, a periodicity configuration of the CSI-RS, a quantity of ports of the CSI-RS, a density of the CSI-RS, or an index of a BWP. In addition, the CSI-RS is for sensing. A minimum granularity of a sending periodicity of the CSI-RS may be 1, indicating that the CSI-RS may be sent in each downlink slot. A frequency domain density of the CSI-RS can be 6 or 12. When the density is 6, it indicates that the CSI-RS is sent at an interval of one RE in frequency domain. When the density is 12, it indicates that the CSI-RS can be sent on each RE in frequency domain. Bandwidth for sending the CSI-RS may be configured as full-bandwidth sending. Sending the CSI-RS does not depend only on the BWP.

In this embodiment of this application, the first indication information may include the first configuration information. In other words, the network device directly sends the first configuration information to the terminal device. For example, the first indication information may be carried in RRC signaling. In other words, the network device sends the RRC signaling to the terminal device, where the RRC signaling includes the first configuration information. For another example, the first indication information may be carried in DCI signaling. In other words, the network device sends the DCI signaling to the terminal device, where the DCI signaling includes the first configuration information.

S403: The terminal device determines information in the second signal based on the first signal.

The terminal device may determine, by receiving the first configuration information and third configuration information, that the first resource for sending the first signal and the second resource for sending the second signal overlap. In addition, the first antenna port number for sending the first signal is different from the second antenna port number for sending the second signal. In this case, the terminal device may consider that the network device transmits the first signal and the second signal at different layers. In other words, the first signal and the second signal are superposed after being precoded, to obtain a fourth signal, and the fourth signal is sent to the terminal device. After receiving the fourth signal from the network device, the terminal device may determine the information in the second signal based on the first signal, that is, demodulate the second signal based on the first signal. For example, the terminal device may estimate, based on the first configuration information, the channel (or an equivalent channel of the channel) that carries the first signal. The example in FIG. 1 is still used. The fourth signal received by the terminal device is r[n]. The terminal device may estimate HWs based on the first configuration information, to remove $HW_s s[n]$ from r[n], that is, cancel the interference caused by the first signal (namely, s[n]) to the second signal (namely, c[n]). Then, c[n] is demodulated to obtain the information in c[n].

S404: The network device receives an echo signal from the first signal.

If the first signal is for sensing, after receiving a target of the first signal, the target reflects the echo signal of the first signal to the network device. The network device may determine some attribute information of the target based on the echo signal. For example, the information is a position and a speed of the target. The target may include the terminal device, an uncrewed aerial vehicle, a vehicle, or the like. An example in which the echo signal of the first signal is from the terminal device is used in FIG. 4.

In this embodiment of this application, the network device may send the first signal and the second signal at different layers on the same time domain resource. In this case, the network device may notify the terminal device of the configuration information for sending the first signal. The terminal device determines, based on the configuration information, related information of the first signal, for example, a signal sequence carried by the first signal, to determine the information in the second signal based on the related information of the first signal, to reduce or cancel the interference caused by the first signal to the second signal and improve communication performance of the second signal.

The first configuration information is indicated in the foregoing manner in which the first indication information includes the first configuration information. In an alternative implementation, the first indication information may alternatively include an index (referred to as a first index in this specification) of the first configuration information. In this indication manner, the first configuration information may be indirectly indicated by using the first index. Because the first index occupies fewer bits than the first configuration information, resource overheads of the first indication information can be reduced. The first indication information may be carried in DCI signaling. The DCI signaling includes the first index. For another example, the first indication information may be carried in RRC signaling. The RRC signaling includes the first index.

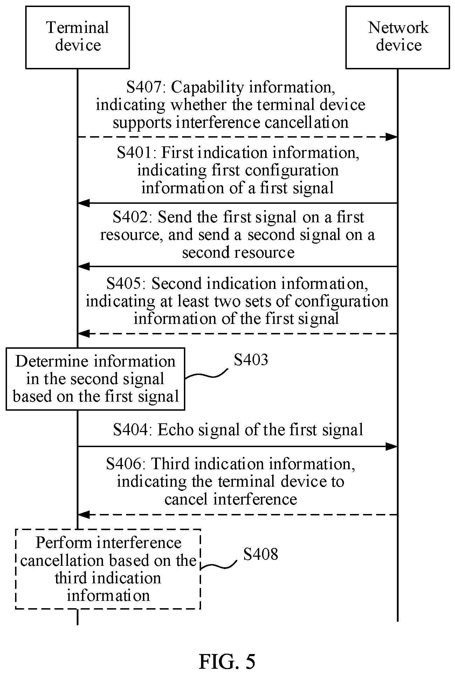

In this case, the network device configures at least two sets of configuration information. Different configuration information in the at least two sets of configuration information corresponds to different indexes. For example, refer to a procedure shown in FIG. 5. Based on FIG. 4, S405 is further performed in FIG. 5.

S405: The network device sends second indication information to the terminal device, and correspondingly, the terminal device receives the second indication information.

The second indication information may indicate the at least two sets of configuration information. For example, the second indication information may include the at least two sets of configuration information, or the second indication information may include indexes, that is, a first index set, respectively corresponding to the at least two sets of configuration information. The network device may dynamically configure the at least two sets of configuration information for the terminal device by using the second indication information. This is more flexible. The second indication information may be carried in the RRC signaling or the DCI signaling. It should be noted that the first indication information and the second indication information may be carried in same signaling, or may be carried in different signaling. This is not limited in embodiments of this application. If the first indication information and the second indication information are carried in the same signaling, the signaling may include the at least two sets of configuration information and the first index. Alternatively, the signaling may include the indexes of the at least two sets of configuration information and the first index. The indexes of the at least two sets of configuration information include the first index. In this case, a correspondence between the at least two sets of configuration information and at least two indexes may be predefined, preconfigured, or configured by the network device. The terminal device may determine the first configuration information based on the received signaling that includes the first indication information and the second indication information.

It may be understood that the at least two sets of configuration information may be preconfigured or predefined. Therefore, S405 is not a necessary step, and is illustrated by using a dashed line in FIG. 5. In addition, if S405 is performed, S405 is performed before S403. In other words, the at least two sets of configuration information may be predefined, preconfigured, or configured by the network device. Different configuration information in the at least two sets of configuration information corresponds to different indexes. The correspondence between the at least two sets of configuration information and at least two indexes (an index set (list)) may be predefined, preconfigured, or configured by the network device. It may be understood that the index set is a set including the indexes respectively corresponding to the at least two sets of configuration information. In a possible implementation, the at least two sets of configuration information and the correspondence between the at least two sets of configuration information and at least two indexes may be predefined, preconfigured, or configured by the network device. Alternatively, the at least two sets of configuration information and the at least two indexes may be predefined, preconfigured, or configured by the network device. In this case, it may be considered by default that the at least two sets of configuration information are sequentially in one-to-one correspondence with the at least two indexes. The terminal device may determine the first configuration information corresponding to the first index based on the first index and the correspondence between the at least two sets of configuration information and at least two indexes.

For example, if K sets of configuration information may be predefined, preconfigured, or configured by the network device, the first indication information may occupy $\lfloor \log_2(K) \rfloor$ bits to indicate the first index, to indicate the first configuration information corresponding to the first index. For example, if K = 4, the first indication information may occupy two bits to indicate the first index. For example, a bit "00" indicates an index 0, a bit "01" indicates an index 1, a bit "10" indicates an index 2, and a bit "11" indicates an index 3. It may be understood that $\lfloor X \rfloor$ indicates that X is rounded down.

It should be noted that types of information that is included in the at least two sets of configuration information and that is for sending the first signal may be the same, or may be different, and values of same information for sending the first signal may be the same, or may be different. For example, Table 2 is a schematic table of the at least two sets of configuration information. Table 2 uses two sets of configuration information as an example.

**Table 2**

| Configuration information of the first signal | Configuration information 1 | Configuration information 2 |
|---|---|---|
| Configuration index number | Configuration index number 0 | Configuration index number 1 |
| Time domain resource information | Time domain symbol index 0 | Time domain symbol index 0 |
| Frequency domain resource information | Bandwidth W of the first signal | Bandwidth W of the first signal |
| | Start RE index 1 | Start RE index 2 |
| | Frequency domain interval P | Frequency domain interval Q |

(continued)

| Sequence information | A sequence type is the ZC sequence | A sequence type is the gold sequence |
| --- | --- | --- |
| | Base sequence index | Scrambling code information corresponding to the gold sequence |
| | Cyclic shift factor | |

As shown in Table 2, information types included in the configuration information 1 and the configuration information 2 are different due to different sequence types. The values of the same information for sending the first signal may be the same or may be different. For example, the time domain symbol indexes in the configuration information 1 and the configuration information 2 are the same. In other words, the configuration information 1 and the configuration information 2 indicate that symbol positions for sending the first signal are the same. The start RE indexes in the configuration information 1 and the configuration information 2 are different. In other words, the configuration information 1 and the configuration information 2 indicate that start REs for sending the first signal are different. It should be noted that Table 2 uses only two sets of configuration information as an example. A size of Table 2, an information type included in each set of configuration information, and a value of information are not limited in embodiments of this application.

It should be understood that in addition to sending the first indication information to the terminal device to notify the terminal device of the first configuration information of the first signal, the network device may further send the third configuration information of the second signal to the terminal device. The terminal device receives the second signal based on the third configuration information. The third configuration information may include indication information of the second resource and the second antenna port number. The third configuration information may further include other possible information for sending the second signal. The second signal may be considered as a signal (also referred to as a PDSCH signal) carried on a PDSCH communicated between the network device and the terminal device. Correspondingly, the third configuration information may still use a current configuration of the PDSCH signal. For example, if the second signal is the DMRS, the third configuration information still uses a currently supported configuration of the DMRS. For another example, if the second signal is the CSI-RS, the third configuration information still uses a currently supported configuration of the CSI-RS.

In S401, the network device notifies one terminal device of the first configuration information of the first signal. In a possible implementation, the network device may simultaneously notify a plurality of terminal devices of the configuration information of the first signal. For example, the network device indicates the first indication information to the plurality of terminal devices in a broadcast manner or a multicast manner. The first indication information is carried by using cell-level RRC signaling. To be specific, the network device may notify the plurality of terminal devices of the configuration information of the first signal by sending the first indication information once, to reduce signaling overheads. For example, a first terminal device and a third terminal device exist, and the first indication information may indicate the first configuration information of the first signal. The first configuration information corresponds to the first terminal device and the third terminal device.

It may be understood that the network device may pre-estimate the interference caused by the first signal to the second signal. If the interference caused by the first signal to the second signal is small, the terminal device does not need to cancel the interference caused by the first signal to the second signal, to reduce processing complexity of the terminal device. Therefore, in this embodiment of this application, if the interference caused by the first signal to the second signal is large, the network device may indicate the terminal device to cancel the interference caused by the first signal to the second signal. In this way, power consumption caused by performing an unnecessary interference cancellation operation by the terminal device can be reduced, thereby reducing energy consumption of the terminal device. For example, the network device may perform S406 in FIG. 5.

S406: The network device sends third indication information to the terminal device, and correspondingly, the terminal device receives the third indication information from the network device.

The third indication information may indicate the terminal device to determine the information in the second signal based on the first signal. It may also be considered that the third indication information may enable the terminal device to determine the information in the second signal based on the first signal. Alternatively, the third indication information indicates the terminal device to cancel the interference, indicates the terminal device to perform interference cancellation, is used to enable the terminal device to perform an interference cancellation function, or is used to activate the terminal device to perform the interference cancellation function. The network device may determine, based on a magnitude of the interference caused by the first signal to the second signal, whether to send the third indication information to the terminal device. When the interference caused by the first signal to the second signal is small, the network device may not send the third indication information. When the interference caused by the first signal to the second signal is large, the network device sends the third indication information to the terminal device. In this way, the power consumption caused by performing the unnecessary interference cancellation operation by the terminal device can be reduced, thereby reducing the energy consumption of the terminal device. Optionally, the third indication information may be carried in DCI or RRC.

It should be noted that in this embodiment of this application, when the network device sends the first indication information, it may be considered by default that the terminal device needs to cancel the interference. In other words, the first indication information may implicitly indicate the terminal device to cancel the interference. Therefore, S406 is not a necessary step, and is illustrated by using a dashed line in FIG. 5. Alternatively, the network device sends the first indication information, and the terminal device receives the first indication information. However, the terminal device receives no third indication information. In this case, it may be considered by default that the interference does not need to be cancelled. In this case, the terminal device does not need to determine the information in the second signal based on the first signal. In addition, a sequence of performing S406 and S401 to S403 is not limited in embodiments of this application. For example, S406 may be performed before or after S401, S402, or S403.

S407: The terminal device sends capability information to the network device, and correspondingly, the network device receives the capability information from the terminal device.

The capability information may indicate whether the terminal device has an interference cancellation (interference cancellation, IC) capability. For example, a new information element may be added to the capability information of the terminal device. The information element indicates whether the terminal device supports interference cancellation. If the terminal device does not support interference cancellation, in other words, the terminal device has no interference cancellation capability, the network device does not need to send the third indication information to the terminal device. It should be noted that S407 is not a necessary step, and is illustrated by using a dashed line in FIG. 5. If S407 is not performed, it may be considered by default that the terminal device supports interference cancellation, in other words, the terminal device has the interference cancellation capability. It may be understood that S407 may be performed before S406.

Optionally, the capability information may indicate a capability parameter that is of interference cancellation and that is supported by the terminal device, to assist the network device in configuring the first configuration information for sending the first signal, to improve an effect of interference cancellation of the terminal device. For example, the capability parameter may include one or more types of information that is supported by the terminal device and that is included in the configuration information for sending the first signal. For example, if the capability parameter includes the ZC sequence, it indicates that the terminal device supports interference cancellation for sending the first signal by using the ZC sequence. A sequence type included in the first configuration information configured by the network device based on the capability parameter is the ZC sequence. For another example, if the capability parameter includes the frequency domain interval P, a frequency domain interval included in the first configuration information configured by the network device based on the capability parameter is P. It may be understood that when the capability information can be for assisting the network device in configuring the first configuration information, S407 may alternatively be performed before S401.

In the foregoing embodiment, an example in which the network device indicates one set of configuration information of the first signal to the terminal device is used. The terminal device may cancel, based on the set of configuration information, the interference caused by the first signal to the second signal. In a possible scenario, interference received by the terminal device may be from a same cell, or may be from a neighboring cell. In other words, the interference received by the terminal device may be intra-cell interference, or may be inter-cell interference.

For example, FIG. 9 is a schematic diagram of a terminal device being interfered from different cells. FIG. 9 uses a terminal device 1 as an example. In a cell 1, the terminal device 1 may receive a first signal and a second signal that are sent by a first network device. The first signal is an interfering signal for the second signal. In a cell 2, a second network device may send a third signal to a vehicle in the cell 2. The third signal may be received by the terminal device 1 in the cell 1. In this case, the third signal is an interfering signal for the second signal of the terminal device 1. It can be learned that interference to the second signal of the terminal device 1 is from the first signal from the cell 1 and the third signal from the cell 2.

When the terminal device is interfered by signals from different cells, to cancel the inter-cell interference, a network device may indicate a plurality of sets of configuration information to the terminal device. The plurality of sets of configuration information may be from different cells. For example, the terminal device is interfered by the first signal from the cell 1 and a first signal from the cell 2. First indication information may indicate first configuration information and second configuration information. For example, the first indication information indicates the first configuration information by using M1 bits. The first indication information indicates the second configuration information by using M2 bits. The first configuration information is configuration information of the first signal from the cell 1. The second configuration information is configuration information of the third signal from the cell 2. It may be considered that the second configuration information is different from the first configuration information. The terminal device receives the first indication information, and may determine the first configuration information and the second configuration information based on the first indication information. The terminal device may cancel, based on the first configuration information, the interference caused by the first signal from the cell 1 to the second signal. Similarly, the terminal device may cancel, based on the second configuration information, the interference caused by the third signal from the cell 2 to the second signal.

In a possible implementation, for the cell 1, at least two sets of configuration information may be predefined, preconfigured, or configured by the network device. For the cell 2, at least two sets of configuration information may also be predefined, preconfigured, or configured by the network device. Indexes of the at least two sets of configuration information corresponding to the cell 1 may be the same as or different from indexes of the at least two sets of configuration information corresponding to the cell 2. For whether the indexes of the at least two sets of configuration information corresponding to the cell 1 are the same as the indexes of the at least two sets of configuration information corresponding to the cell 2, specific implementation forms of the first indication information and the second indication information are different. The following describes the specific implementation forms of the first indication information and the second indication information with reference to Example b1 and Example b2.

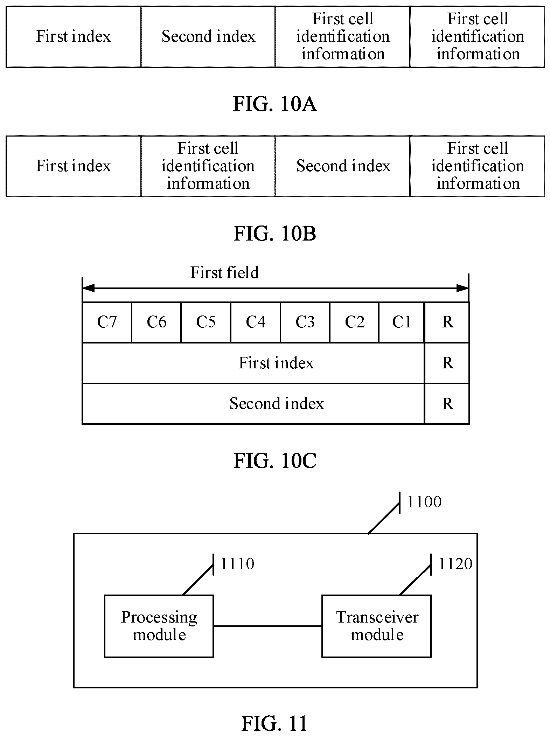

Example b1: The indexes of the configuration information corresponding to the cell 1 and the cell 2 are separately and independently numbered. For example, the indexes of the at least two sets of configuration information corresponding to the cell 1 are numbered from 0, and the indexes of the at least two sets of configuration information corresponding to the cell 2 are also numbered from 0. In this case, the indexes of the at least two sets of configuration information corresponding to the cell 1 may be the same as the indexes of the at least two sets of configuration information corresponding to the cell 2. To enable the terminal device to distinguish whether received configuration information corresponds to the cell 1 or the cell 2, in Example b1, the first indication information may further include cell identification information. The cell identification information indicates a cell corresponding to the configuration information indicated by the first indication information. In a possible design, if the first indication information indicates a plurality of sets of configuration information, a correspondence between the plurality of sets of configuration information and the cell identification information may be predefined. For example, the plurality of sets of configuration information indicated by the first indication information are sequentially in one-to-one correspondence with a plurality of pieces of cell identification information included in the first indication information. For example, the first indication information includes a first index, a second index, first cell identification information, and second cell identification information. The first index corresponds to the first cell identification information, and the second index corresponds to the second cell identification information. The first cell identification information indicates the cell 1, and the second cell identification information indicates the cell 2. For example, an example in which the indexes and the cell identification information that are included in the first indication information are sequentially sorted is used in FIG. 10A. An example in which the indexes and the cell identification information that are included in the first indication information are sequentially sorted as a group is used FIG. 10B. The terminal device may determine, based on the first cell identification information, that first configuration information indicated by the first index corresponds to the cell 1, and second configuration information indicated by the second index corresponds to the cell 2, and determine, based on the second cell identification information, the cell corresponding to the first configuration information and the cell corresponding to the second configuration information.

In an alternative implementation, the first indication information includes a first field. The first field includes a plurality of cell identification information fields. Each cell identification information field corresponds to one cell identifier. The first field may be indicated by using a bitmap. A quantity of bits occupied by the first field is not limited in embodiments of this application. When a value of the cell identification information field is 1, it may indicate that a configuration information index field corresponding to the cell identification information field exists. On the contrary, when a value of the cell identification information field is 0, it indicates that no configuration information index field corresponding to the cell identification information field exists. Alternatively, when a value of the cell identification information field is 0, it may indicate that a configuration information index field corresponding to the cell identification information field exists. On the contrary, when a value of the cell identification information field is 1, it indicates that no configuration information index field corresponding to the cell identification information field exists. Each configuration information index field corresponds to one configuration information index.

For example, FIG. 10C is a schematic diagram of an implementation form of first indication information. A first field in FIG. 10C includes seven cell identification information fields in total: C1 to C7. Assuming that the first field further includes a reserved bit, for example, R in FIG. 10C, the first field occupies eight bits. It may be understood that a value of $C_i$ may indicate whether a cell whose cell identifier is i has a corresponding configuration information index field. For example, if values of C1 and C2 are 1, it may be considered that a cell (cell 1) whose cell identifier is 1 and a cell (cell 2) whose cell identifier is 2 have corresponding configuration information indexes. For example, if the values of C1 and C2 are 1, the first indication information includes a first index corresponding to the cell 1 and a second index corresponding to the cell 2, as shown in FIG. 10C. In FIG. 10C, the first index and the second index each occupy seven bits. Optionally, the first indication information may be carried in a medium access control (medium access control, MAC) control element (control element, CE). It should be noted that an example in which an index of configuration information occupies seven bits is used in FIG. 10C. A quantity of bits occupied by the index of the configuration information is not limited in embodiments of this application. For example, the index of the configuration information may occupy two bits, three bits, four bits, five bits, or six bits.

Similar to the first indication information, when second indication information indicates at least two sets of configuration information of the cell 1 and at least two sets of configuration information of the cell 2, the second indication information may further include first cell identification information corresponding to the at least two sets of configuration information of the cell 1 and second cell identification information corresponding to the at least two sets of configuration information of the cell 2. The at least two sets of configuration information of the cell 1 may each correspond to one piece of first cell identification information, or the at least two sets of configuration information of the cell 1 correspond to one piece of first cell identification information. Similarly, the at least two sets of configuration information of the cell 2 may each correspond to one piece of second cell identification information, or the at least two sets of configuration information of the cell 2 correspond to one piece of second cell identification information. For example, it may be agreed that the second indication information indicates that a plurality of sets of configuration information are sorted in a sequence of the cell identification information. The plurality of sets of configuration information are sequentially in one-to-one correspondence with the cell identification information included in the second indication information. For example, the second indication information includes indexes of the at least two sets of configuration information corresponding to the cell 1, indexes of the at least two sets of configuration information corresponding to the cell 2, the first cell identification information, and the second cell identification information. A terminal device receives the second indication information. It is considered by default that the first cell identification information corresponds to the indexes of the at least two sets of configuration information corresponding to the cell 1, and the second cell identification information corresponds to the indexes of the at least two sets of configuration information corresponding to the cell 2.

Example b2: The indexes of the configuration information corresponding to the cell 1 and the cell 2 are numbered together. For example, the indexes of the at least two sets of configuration information corresponding to the cell 1 are numbered from 0, and the indexes of the at least two sets of configuration information corresponding to the cell 2 are also numbered from q. It should be understood that q is greater than or equal to a quantity of sets of the at least two sets of configuration information corresponding to the cell 1. In this case, the indexes of the at least two sets of configuration information corresponding to the cell 1 are different from the indexes of the at least two sets of configuration information corresponding to the cell 2. The first indication information includes a first index and a second index. The terminal device may determine, based on the first index, that configuration information corresponding to the first index is the configuration information of the cell 1, and may determine, based on the second index, that configuration information corresponding to the second index is the configuration information of the cell 2. Similarly, when the second indication information includes the at least two sets of configuration information of the cell 1 and the at least two sets of configuration information of the cell 2, the second indication information may include the indexes corresponding to the at least two sets of configuration information of the cell 1 and the indexes corresponding to the at least two sets of configuration information of the cell 2. The terminal device receives the second indication information and may determine, based on the indexes included in the second indication information, a cell corresponding to each set of configuration information.

S408: The terminal device performs interference cancellation based on third indication information.

If the first indication information indicates a plurality of sets of configuration information, the third indication information may indicate one or more sets of configuration information in the plurality of sets of configuration information to indicate the terminal device to cancel the interference based on the one or more sets of configuration information, to regulate and control the terminal device more flexibly. For example, the first indication information may include indexes of the plurality of sets of configuration information. The third indication information may include an index of the one or more sets of configuration information in the plurality of sets of configuration information. Correspondingly, the terminal device receives the first indication information and the third indication information, and performs interference cancellation based on the configuration information indicated by the third indication information. It may be understood that if the plurality of sets of configuration information included in the first indication information correspond to different cells, in addition to the index of the one or more sets of configuration information, the third indication information may further include cell identification information corresponding to each index.

It may be understood that if S406 is not performed, S408 does not need to be performed either, and therefore, is illustrated by using a dashed line in FIG. 5.

In the embodiments provided in this application, the method provided in embodiments of this application is separately described from a perspective of interaction among the first terminal device, the network device, and even a second terminal device. Steps performed by the network device may be implemented by different functional entities that form the network device. In other words, functional entities that perform the steps of the network device may be located in different physical entities. For example, a first functional entity is configured to receive resource occupation information from the first terminal device. A second functional entity is configured to determine a second resource pool based on the resource occupation information reported by the first terminal device. A third functional entity is configured to send the second configuration information. In other words, the first functional entity, the second functional entity, and the third functional entity jointly complete the steps performed by the network device in embodiments of this application. A specific division manner of the functional entities is not limited in this application. For example, the second functional entity and the third functional entity may alternatively be one functional entity. When the network architecture includes one or more DUs, one or more CUs, and one or more radio frequency units (radio unit, RU), the steps performed by the network device may be implemented by one or more of the DU, the CU, and the RU. To implement functions in the method provided in the foregoing embodiments of this application, the first terminal device and the network device may include a hardware structure and/or a software module, and implement the foregoing functions by form of the hardware structure, the software module, or the hardware structure and the software module. Whether a function in the foregoing functions is performed by using the hardware structure, the software module, or the combination of the hardware structure and the software module depends on particular applications and design constraints of the technical solutions.

An embodiment of this application further provides a communication apparatus. The following describes, with reference to the accompanying drawings, communication apparatuses configured to implement the foregoing methods in embodiments of this application.

FIG. 11 is a schematic block diagram of a communication apparatus 1100 according to an embodiment of this application. The communication apparatus 1100 may include a processing module 1110 and a transceiver module 1120. Optionally, a storage unit may be further included. The storage unit may be configured to store instructions (code or a program) and/or data. The processing module 1110 and the transceiver module 1120 may be coupled to the storage unit. For example, the processing module 1110 may read the instructions (the code or the program) and/or the data in the storage unit, to implement a corresponding method. The foregoing units may be independently disposed, or may be partially or completely integrated.

In some possible implementations, the communication apparatus 1100 can correspondingly implement behavior and functions of the terminal device in the foregoing method embodiments, for example, implement the method performed by the terminal device in the embodiment in FIG. 4 or FIG. 5. The communication apparatus 1100 may be a terminal device, may be a component (for example, a chip or a circuit) used in the terminal device, or may be a chip or a chip set in the terminal device or a part that is of the chip and that is configured to perform a related method function.

For example, the transceiver module 1120 may be configured to: receive first indication information, receive a first signal on a first resource, and receive a second signal on a second resource. A second antenna port number corresponding to the second signal is different from a first antenna port number corresponding to the first signal. The first resource and the second resource overlap. The first indication information indicates first configuration information of the first signal. The first configuration information includes at least information about the first resource and the first antenna port number. The processing module 1110 may be configured to determine information in the second signal based on the first signal.

In an optional implementation, the first configuration information further includes at least one of the following information: sequence information or power information corresponding to the first signal. The power information indicates a ratio of a transmit power of the second signal to a transmit power of the first signal on a same frequency domain resource unit.

In an optional implementation, the first indication information includes a first index, and the first index corresponds to the first configuration information.

In an optional implementation, the transceiver module 1120 is further configured to receive second indication information from a network device, where the second indication information indicates at least two sets of configuration information, and the at least two sets of configuration information include the first configuration information.

In an optional implementation, the transceiver module 1120 is further configured to receive third indication information from the network device. The third indication information indicates the communication apparatus 1100 to determine the information in the second signal based on the first signal.

In an optional implementation, the first indication information further includes a second index. The second index indicates second configuration information. The second configuration information is configuration information of a third signal. The third signal and the first signal are from different cells. A resource that carries the third signal and the second resource overlap.

In an optional implementation, the first indication information is carried in DCI and/or RRC.

In an optional implementation, the third indication information is carried in the DCI or the RRC.

In some possible implementations, the communication apparatus 1100 can correspondingly implement behavior and functions of the network device in the foregoing method embodiments, for example, implement the method performed by the network device in the embodiment in FIG. 4 or FIG. 5. For example, the communication apparatus 1100 may be the network device, may be a component (for example, a chip or a circuit) used in the network device, or may be a chip or a chip set in the network device or a part that is of the chip and that is configured to perform a related method function.

For example, the processing module 1110 may be configured to determine the first indication information, where the first indication information indicates the first configuration information of the first signal, and the first configuration information includes at least the information about the first resource and the first antenna port number. The transceiver module 1120 may be configured to: send the first indication information to the terminal device, send the first signal on the first resource, and send the second signal on the second resource. The first resource and the second resource overlap, and the second antenna port number corresponding to the second signal is different from the first antenna port number.

In an optional implementation, the first configuration information further includes at least one of the following information: the sequence information or the power information corresponding to the first signal. The power information indicates the ratio of the transmit power of the second signal to the transmit power of the first signal on the same frequency domain resource unit.

In an optional implementation, the first indication information includes the first index, and the first index corresponds to the first configuration information.

In an optional implementation, the transceiver module 1120 is further configured to send second indication information to the terminal device, where the second indication information indicates the at least two sets of configuration information, and the at least two sets of configuration information include the first configuration information.

In an optional implementation, the transceiver module is further configured to send the third indication information to the terminal device, where the third indication information indicates the terminal device to determine the information in the second signal based on the first signal.

In an optional implementation, the first indication information further includes the second index. The second index indicates the second configuration information. The second configuration information is the configuration information of the third signal. The third signal and the first signal are from different cells. The resource that carries the third signal and the second resource overlap.

In an optional implementation, the first configuration information corresponds to different terminal devices.

In an optional implementation, the transceiver module 1120 is further configured to receive an echo signal of the first signal. The echo signal is for sensing a target.

In an optional implementation, the first indication information is carried in the DCI and/or the RRC.

In an optional implementation, the third indication information is carried in the DCI or the RRC.

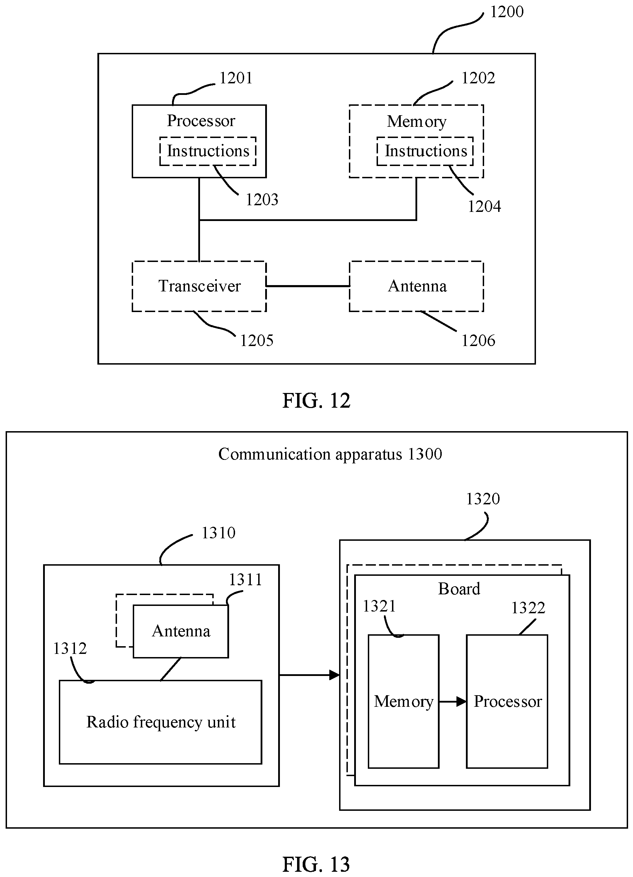

FIG. 12 is a schematic block diagram of a communication apparatus 1200 according to an embodiment of this application. The communication apparatus 1200 may be a terminal device, and can implement a function of the terminal device in the methods provided in embodiments of this application. Alternatively, the communication apparatus 1200 may be a network device, and can implement a function of the network device in the methods provided in embodiments of this application. Alternatively, the communication apparatus 1200 may be an apparatus that can support the terminal device in implementing a corresponding function in the methods provided in embodiments of this application, or an apparatus that can support the network device in implementing a corresponding function in the methods provided in embodiments of this application. The communication apparatus 1200 may be a chip system. In this embodiment of this application, the chip system may include a chip, or may include a chip and another discrete component. For a specific function, refer to the descriptions in the foregoing method embodiments.

The communication apparatus 1200 includes one or more processors 1201, configured to implement or support the communication apparatus 1200 in implementing the function of the network device (a base station) or the terminal device in the methods provided in embodiments of this application. For details, refer to the detailed descriptions in the method examples. Details are not described herein again. The processor 1201 may also be referred to as a processing unit or a processing module, and may implement a specific control function. The processor 1201 may be a general-purpose processor, a dedicated processor, or the like. For example, the processor 1201 includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to control the communication apparatus 1200, execute a software program, and/or process data. Different processors may be independent components, or may be integrated into one or more processors, for example, integrated into one or more application-specific integrated circuits.

Optionally, the communication apparatus 1200 includes one or more memories 1202, to store instructions 1204. The instructions may be run on the processor 1201, so that the communication apparatus 1200 performs the method described in the foregoing method embodiments. The memory 1202 is coupled to the processor 1201. The coupling in this embodiment of this application may be an indirect coupling or a communication connection between apparatuses, units, or modules in an electrical form, a mechanical form, or another form, and is for information exchange between the apparatuses, the units, or the modules. The processor 1201 may collaboratively operate with the memory 1202. At least one of at least one memory may be included in the processor. It should be noted that the memory 1202 is not necessary, and therefore, the memory 1202 is illustrated by using a dashed line in FIG. 12.

Optionally, the memory 1202 may further store data. The processor and the memory may be separately disposed, or may be integrated together. In this embodiment of this application, the memory 1202 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code by form of an instruction or a data structure and that can be accessed by a computer, but is not limited thereto. The memory in this embodiment of this application may alternatively be a circuit or any other apparatus that can implement a storage function, and is configured to store program instructions and/or the data.

Optionally, the communication apparatus 1200 may include instructions 1203 (which may also be referred to as code or a program sometimes). The instructions 1203 may be run on the processor, so that the communication apparatus 1200 performs the methods described in the foregoing embodiments. The processor 1201 may store data.

Optionally, the communication apparatus 1200 may further include a transceiver 1205 and an antenna 1206. The transceiver 1205 may be referred to as a transceiver unit, a transceiver module, a transceiver machine, a transceiver circuit, a transceiver, an input/output interface, or the like, and is configured to implement a transceiver function of the communication apparatus 1200 by using the antenna 1206.

The processor 1201 and the transceiver 1205 described in this application may be implemented in an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1200 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 1200 may include more or fewer components, or some components are integrated, or some components are split. These components may be implemented by hardware, software, or a combination of software and hardware.

It should be noted that the communication apparatus in the foregoing embodiments may be a terminal device (or a network device), may be a circuit, may be a chip used in a terminal device (or a network device), or may be another combined device, component, or the like that has a function of a terminal (or a network device). When the communication apparatus is the terminal device (or the network device), the transceiver module may be the transceiver, and may include the antenna, a radio frequency circuit, and the like, and the processing module may be the processor, for example, a central processing unit (central processing unit, CPU). When the communication apparatus is a component having a function of the terminal device (or the network device), the transceiver module may be a radio frequency unit, and the processing module may be the processor. When the communication apparatus is the chip system, the communication apparatus may be a field programmable gate array (field programmable gate array, FPGA), an application-specific integrated circuit (application-specific integrated circuit, ASIC), a system-on-a-chip (system-on-a-chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

FIG. 13 is a schematic diagram of a simplified structure of a communication apparatus. For ease of understanding and illustration, an example in which the communication apparatus is a base station is used in FIG. 13. The base station may be used in the system shown in FIG. 2, may be the network device in FIG. 2, and performs a function of the network device in the foregoing method embodiments.

The communication apparatus 1300 may include a processor 1322. The communication apparatus 1300 may further include a transceiver 1310 and a memory 1321. The processor 1322 is configured to support the communication apparatus 1300 in performing a corresponding function in the foregoing method. The transceiver 1310 may be configured for the communication apparatus to perform communication, for example, configured to send the foregoing first indication information. The memory 1321 is coupled to the processor 1322, and may be configured to store a program and data that are necessary for implementing each function of the communication apparatus 1300.

Specifically, the transceiver 1310 may be a wireless transceiver, and may be configured to support the communication apparatus 1300 in receiving and sending signaling and/or data through a radio air interface. The transceiver 1310 may also be referred to as a transceiver unit or a communication unit. The transceiver 1310 may include one or more radio frequency units 1312 and one or more antennas 1311. The radio frequency unit, for example, a remote radio unit (remote radio unit, RRU) or an active antenna unit (active antenna unit, AAU), may be specifically configured to transmit a radio frequency signal and perform conversion between the radio frequency signal and a baseband signal. The one or more antennas may be specifically configured to radiate and receive the radio frequency signal. Optionally, the transceiver 1310 may include only the foregoing radio frequency unit. In this case, the communication apparatus 1300 may include the transceiver 1310, the memory 1321, the processor 1322, and the antenna 1311.

The memory 1321 and the processor 1322 may be integrated together, or may be independent of each other. As shown in FIG. 13, the memory 1321 and the processor 1322 may be integrated into a control unit 1320 of the communication apparatus 1300. For example, the control unit 1320 may include a baseband unit (baseband unit, BBU) of an LTE base station. The baseband unit may also be referred to as a digital unit (digital unit, DU). Alternatively, the control unit 1320 may include a DU and/or a CU in a base station in 5G and a future radio access technology. The control unit 1320 may include one or more antenna panels. A plurality of antenna panels may jointly support a radio access network (for example, an LTE network) of a single access standard, or a plurality of antenna panels may separately support radio access networks (for example, an LTE network, a 5G network, or another network) of different access standards. The memory 1321 and the processor 1322 may serve one or more antenna panels. In other words, the memory 1321 and the processor 1322 may be separately disposed on each antenna panel. Alternatively, a plurality of antenna panels may share a same memory 1321 and a same processor 1322. In addition, a necessary circuit may be disposed on each antenna panel. For example, the circuit may be configured to implement coupling between the memory 1321 and the processor 1322. The transceiver 1310, the processor 1322, and the memory 1321 may be connected by using a bus (bus) structure and/or another connection medium.

Based on the structure shown in FIG. 13, when the communication apparatus 1300 needs to send data, the processor 1322 may perform baseband processing on to-be-sent data and then output the baseband signal to the radio frequency unit. The radio frequency unit performs radio frequency processing on the baseband signal and then sends the radio frequency signal in an electromagnetic wave form through the antenna. When data is sent to the communication apparatus 1300, the radio frequency unit receives the radio frequency signal through the antenna, converts the radio frequency signal into the baseband signal, and outputs the baseband signal to the processor 1322. The processor 1322 converts the baseband signal into data and processes the data.

Based on the structure shown in FIG. 13, the transceiver 1310 may be configured to perform the steps performed by the transceiver 1205, and/or the processor 1322 may be configured to invoke instructions in the memory 1321, to perform the steps performed by the processor 1201.

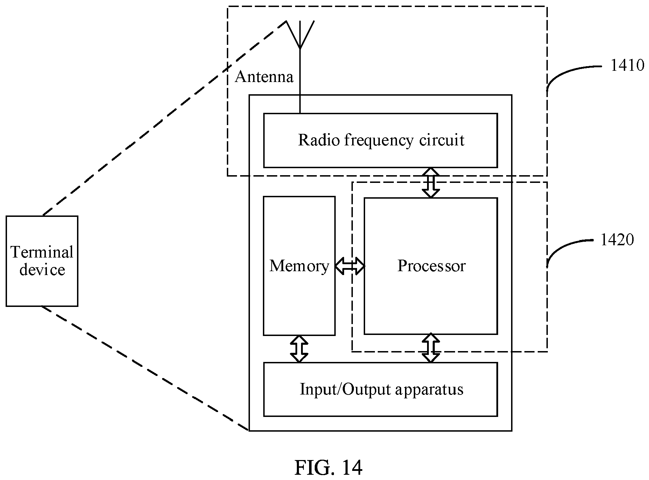

FIG. 14 is a schematic diagram of a simplified structure of a terminal device. For ease of understanding and illustration, an example in which the terminal device is a mobile phone is used in FIG. 14. As shown in FIG. 14, the terminal device includes a processor, a memory, a radio frequency circuit, an antenna, and an input/output apparatus. The processor is mainly configured to: process a communication protocol and communication data, control an on-board unit, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in an electromagnetic wave form. The input/output apparatus, for example, a touchscreen, a display, or a keyboard, is mainly configured to: receive data input by a user and output data to the user. It should be noted that some types of devices may have no input/output apparatus.

When data needs to be sent, the processor performs baseband processing on the to-be-sent data and then outputs the baseband signal to the radio frequency circuit. The radio frequency circuit performs radio frequency processing on the baseband signal and then sends the radio frequency signal to the outside in the electromagnetic wave form through the antenna. When data is sent to the device, the radio frequency circuit receives the radio frequency signal through the antenna, converts the radio frequency signal into the baseband signal, and outputs the baseband signal to the processor. The processor converts the baseband signal into data and processes the data. For ease of description, FIG. 14 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of an apparatus, and the processor having a processing function may be considered as a processing unit of the apparatus. As shown in FIG. 14, the apparatus includes a transceiver unit 1410 and a processing unit 1420. The transceiver unit 1410 may also be referred to as a transceiver, a transceiver machine, a transceiver apparatus, or the like. The processing unit 1420 may also be referred to as a processor, a processing board, a processing module, a processing apparatus, or the like. Optionally, a device for implementing a receiving function in the transceiver unit 1410 may be considered as a receiving unit, and a device for implementing a sending function in the transceiver unit 1410 may be considered as a sending unit. In other words, the transceiver unit 1410 includes the receiving unit and the sending unit. The transceiver unit 1410 sometimes may also be referred to as the transceiver machine, the transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1410 is configured to perform a sending operation and a receiving operation of the terminal device in the foregoing method embodiments, and the processing unit 1420 is configured to perform another operation other than the receiving operation and the sending operation of the terminal device in the foregoing method embodiments. For example, in an implementation, the transceiver unit 1410 may be configured to perform a sending step and a receiving step in the embodiment shown in FIG. 4 or FIG. 5, and/or another process for supporting a technology described in this specification. The processing unit 1420 may be configured to perform a step other than the receiving step or the sending step in the embodiment shown in FIG. 4 or FIG. 5, and/or configured to support another process of the technology described in this specification.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a plurality of terminal devices, or may further include more network devices and a plurality of terminal devices. For example, the communication system includes a network device and a terminal device, for example, the terminal device, that are configured to implement related functions in FIG. 4 or FIG. 5. The network device is separately configured to implement a function related to a network part in FIG. 4 or FIG. 5. The terminal device is configured to implement a function related to the terminal device, for example, the terminal device, in FIG. 4 or FIG. 5. For details, refer to the related descriptions in the method embodiments. Details are not described herein again.

An embodiment of this application further provides a computer-readable storage medium, including instructions. When the instructions are run on a computer, the computer is enabled to perform the method performed by the network device in FIG. 4 or FIG. 5. Alternatively, when the instructions are run on a computer, the computer is enabled to perform the method performed by the terminal device in FIG. 4 or FIG. 5.

An embodiment of this application further provides a computer program product, including instructions. When the instructions are run on a computer, the computer is enabled to perform the method performed by the network device in FIG. 4 or FIG. 5. Alternatively, when the instructions are run on a computer, the computer is enabled to perform the method performed by the terminal device in FIG. 4.

An embodiment of this application provides a chip system. The chip system includes a processor, and may further include a memory, to implement a function of the network device or the first terminal device in the foregoing method, or to implement a function of the network device and the terminal in the foregoing method. The chip system may include a chip, or may include a chip and another discrete component.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that illustrative logical blocks (illustrative logical blocks) described in embodiments disclosed in this specification and steps (steps) can be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that this implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is only an example. For example, division into the units is only a logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate. Components displayed as units may or may not be physical units, that is, may be located in one place, or may be distributed on a plurality of network units. Some or all of the units may be selected based on actual requirements to achieve the objectives of the solutions of embodiments.

When the functions are implemented by form of a software functional unit and sold or used as an independent product, the functions may be stored in a computer-readable storage medium. Based on this understanding, a part that essentially contributes to the technical solutions of this application or a part of the technical solutions may be embodied by form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art may make various modifications and variations to this application. If these modifications and variations of this application fall within the scope of the claims of this application and equivalent technologies thereof, this application is also intended to cover these modifications and variations.

**Claims**

1. A communication method, comprising:

   receiving first indication information, wherein the first indication information indicates first configuration information of a first signal, and the first configuration information comprises at least information about a first resource and a first antenna port number;
   receiving the first signal on the first resource and receiving a second signal on a second resource, wherein a second antenna port number corresponding to the second signal is different from the first antenna port number, and the first resource and the second resource overlap; and
   determining information in the second signal based on the first signal.

2. The method according to claim 1, wherein the first configuration information further comprises at least one of the following information: sequence information or power information corresponding to the first signal, wherein the power information indicates a ratio of a transmit power of the second signal to a transmit power of the first signal on a same frequency domain resource unit.

3. The method according to claim 1 or 2, wherein the first indication information comprises a first index, and the first index corresponds to the first configuration information.

4. The method according to claim 3, wherein the method further comprises:
   receiving second indication information from a network device, wherein the second indication information indicates at least two sets of configuration information, and the at least two sets of configuration information comprise the first configuration information.

5. The method according to any one of claims 1 to 4, wherein the method further comprises:
   receiving third indication information from the network device, wherein the third indication information indicates a terminal device to determine the information in the second signal based on the first signal.

6. The method according to claim 2, wherein the first indication information further comprises a second index, the second index indicates second configuration information, the second configuration information is configuration information of a third signal, the third signal and the first signal are from different cells, and a resource that carries the third signal and the second resource overlap.

7. The method according to any one of claims 1 to 6, wherein the first indication information is carried in downlink control information DCI; or the first indication information is carried in radio resource control RRC.

8. A communication method, comprising:

   sending first indication information to a terminal device, wherein the first indication information indicates first configuration information of a first signal, and the first configuration information comprises at least information about a first resource and a first antenna port number; and
   sending the first signal to the terminal device on the first resource, and sending a second signal on a second resource, wherein the first resource and the second resource overlap, and a second antenna port number corresponding to the second signal is different from the first antenna port number.

9. The method according to claim 8, wherein the first configuration information further comprises at least one of the following information: sequence information or power information corresponding to the first signal, wherein the power information indicates a ratio of a transmit power of the second signal to a transmit power of the first signal on a same frequency domain resource unit.

10. The method according to claim 8 or 9, wherein the first indication information comprises a first index, and the first index corresponds to the first configuration information.

11. The method according to claim 10, wherein the method further comprises:
sending second indication information to the terminal device, wherein the second indication information indicates at least two sets of configuration information, and the at least two sets of configuration information comprise the first configuration information.

12. The method according to any one of claims 8 to 11, wherein the method further comprises:
sending third indication information to the terminal device, wherein the third indication information indicates the terminal device to determine information in the second signal based on the first signal.

13. The method according to claim 10, wherein the first indication information further comprises a second index, the second index indicates second configuration information, the second configuration information is configuration information of a third signal, the third signal and the first signal are from different cells, and a resource that carries the third signal and the second resource overlap.

14. The method according to any one of claims 8 to 13, wherein the first configuration information corresponds to different terminal devices.

15. The method according to any one of claims 8 to 14, wherein after the first signal and the second signal are sent to the terminal device, the method further comprises:
receiving an echo signal of the first signal, wherein the echo signal is for sensing a target.

16. The method according to any one of claims 8 to 15, wherein the first indication information is carried in downlink control information DCI; or the first indication information is carried in radio resource control RRC.

17. A communication apparatus, wherein the communication apparatus comprises a processing module and a transceiver module, wherein

the transceiver module is configured to: receive first indication information, receive a first signal on a first resource, and receive a second signal on a second resource, wherein a second antenna port number corresponding to the second signal is different from a first antenna port number corresponding to the first signal, the first resource and the second resource overlap, the first indication information indicates first configuration information of the first signal, and the first configuration information comprises at least information about the first resource and the first antenna port number; and
the processing module is configured to determine information in the second signal based on the first signal.

18. The apparatus according to claim 17, wherein the first configuration information further comprises at least one of the following information: sequence information or power information corresponding to the first signal, wherein the power information indicates a ratio of a transmit power of the second signal to a transmit power of the first signal on a same frequency domain resource unit.

19. The apparatus according to claim 17 or 18, wherein the first indication information comprises a first index, and the first index corresponds to the first configuration information.

20. The apparatus according to claim 19, wherein the transceiver module is further configured to:
receive second indication information from a network device, wherein the second indication information indicates at least two sets of configuration information, and the at least two sets of configuration information comprise the first configuration information.

21. The apparatus according to any one of claims 17 to 20, wherein the transceiver module is further configured to:
receive third indication information from the network device, wherein the third indication information indicates a terminal device to determine the information in the second signal based on the first signal.

22. The apparatus according to claim 18, wherein the first indication information further comprises a second index, the second index indicates second configuration information, the second configuration information is configuration information of a third signal, the third signal and the first signal are from different cells, and a resource that carries the third signal and the second resource overlap.

23. The apparatus according to any one of claims 17 to 22, wherein the first indication information is carried in downlink control information DCI; or the first indication information is carried in radio resource control RRC.

24. A communication apparatus, wherein the communication apparatus comprises a processing module and a transceiver module, wherein

the processing module is configured to determine first indication information, wherein the first indication information indicates first configuration information of a first signal, and the first configuration information comprises at least information about a first resource and a first antenna port number; and
the transceiver module is configured to: send the first indication information to a terminal device, send the first signal on the first resource, and send a second signal on a second resource, wherein the first resource and the second resource overlap, and a second antenna port number corresponding to the second signal is different from the first antenna port number.

25. The apparatus according to claim 24, wherein the first configuration information further comprises at least one of the following information: sequence information or power information corresponding to the first signal, wherein the power information indicates a ratio of a transmit power of the second signal to a transmit power of the first signal on a same frequency domain resource unit.

26. The apparatus according to claim 24 or 25, wherein the first indication information comprises a first index, and the first index corresponds to the first configuration information.

27. The apparatus according to claim 26, wherein the transceiver module is further configured to:
send second indication information to the terminal device, wherein the second indication information indicates at least two sets of configuration information, and the at least two sets of configuration information comprise the first configuration information.

28. The apparatus according to any one of claims 24 to 27, wherein the transceiver module is further configured to:
send third indication information to the terminal device, wherein the third indication information indicates the terminal device to determine information in the second signal based on the first signal.

29. The apparatus according to claim 25, wherein the first indication information further comprises a second index, the second index indicates second configuration information, the second configuration information is configuration information of a third signal, the third signal and the first signal are from different cells, and a resource that carries the third signal and the second resource overlap.

30. The apparatus according to any one of claims 24 to 29, wherein the first configuration information corresponds to different terminal devices.

31. The apparatus according to any one of claims 24 to 30, wherein the transceiver module is further configured to:
receive an echo signal of the first signal, wherein the echo signal is for sensing a target.

32. The apparatus according to any one of claims 24 to 31, wherein the first indication information is carried in downlink control information DCI; or the first indication information is carried in radio resource control RRC.

33. A communication apparatus, wherein the communication apparatus comprises a processor, a communication interface, and a memory, and the processor is coupled to the communication interface and is configured to invoke computer instructions in the memory, to enable the communication apparatus to perform the method according to any one of claims 1 to 7.

34. A communication apparatus, wherein the communication apparatus comprises a processor, a communication interface, and a memory, and the processor is coupled to the communication interface and is configured to invoke computer instructions in the memory, to enable the communication apparatus to perform the method according to any one of claims 8 to 16.

35. A computer-readable storage medium, wherein the computer-readable storage medium stores computer instructions, and when the computer instructions are executed, a computer is enabled to perform the method according to any one of claims 1 to 7, or the computer is enabled to perform the method according to any one of claims 8 to 16.

FIG. 1

FIG. 2

First network
device

Second network
device

Terminal device

FIG. 3A

Core network

Radio access
network

CU

DU ... DU

Terminal device

FIG. 3B

Core network

CU-CP

CU-UP

DU

DU

...

Terminal device

FIG. 3C

Terminal
device

Network
device

S401: First indication information,
indicating first configuration
information of a first signal

S402: Send the first signal on a first
resource, and send a second signal
on a second resource

Determine information
in the second signal
based on the first signal

S403

S404: Echo signal of the first signal

FIG. 4

```
┌─────────────┐                                    ┌─────────────┐
│  Terminal   │                                    │  Network    │
│   device    │                                    │   device    │
└──────┬──────┘                                    └──────┬──────┘
       │     S407: Capability information,                │
       │  indicating whether the terminal device          │
       │     supports interference cancellation           │
       │ - - - - - - - - - - - - - - - - - - - - - - - - >│
       │      S401: First indication information,          │
       │          indicating first configuration          │
       │           information of a first signal           │
       │< ─────────────────────────────────────────────── │
       │       S402: Send the first signal on a first      │
       │       resource, and send a second signal on a     │
       │                 second resource                   │
       │< ─────────────────────────────────────────────── │
       │       S405: Second indication information,         │
       │  indicating at least two sets of configuration    │
       │         information of the first signal            │
       │< - - - - - - - - - - - - - - - - - - - - - - - - -│
┌──────┴────────────┐                                     │
│Determine information│      S403                          │
│  in the second signal│─ ⌇                                │
│ based on the first signal│                              │
└──────┬────────────┘                                     │
       │          S404: Echo signal of the first signal    │
       │ ────────────────────────────────────────────────>│
       │        S406: Third indication information,         │
       │         indicating the terminal device to         │
       │               cancel interference                 │
       │< - - - - - - - - - - - - - - - - - - - - - - - - -│
┌ ─ ─ ─┴─ ─ ─ ─ ─ ─ ─ ┐                                   │
│   Perform interference │       S408                      │
│ cancellation based on the│─ ⌇                           │
│      third indication   │                                │
│        information      │                                │
└ ─ ─ ─┬─ ─ ─ ─ ─ ─ ─ ─ ┘                                  │
```

FIG. 5

FIG. 6

FIG. 7

FIG. 8

FIG. 9

| First index | Second index | First cell identification information | First cell identification information |
|---|---|---|---|

**FIG. 10A**

| First index | First cell identification information | Second index | First cell identification information |
|---|---|---|---|

**FIG. 10B**

First field

| C7 | C6 | C5 | C4 | C3 | C2 | C1 | R |
|---|---|---|---|---|---|---|---|
| First index | | | | | | | R |
| Second index | | | | | | | R |

**FIG. 10C**

1100

1110                    1120

| Processing module | | Transceiver module |

**FIG. 11**

1200

1201

Processor

Instructions

1203

1202

Memory

Instructions

1204

Transceiver

1205

Antenna

1206

FIG. 12

Communication apparatus 1300

1320

1310

1311

Antenna

1312

Radio frequency unit

Board

1321

1322

Memory

Processor

FIG. 13

FIG. 14

## INTERNATIONAL SEARCH REPORT

| International application No. |
| --- |
| **PCT/CN2022/115331** |

### A. CLASSIFICATION OF SUBJECT MATTER

H04W 24/02(2009.01)i; H04L 5/00(2006.01)i; H04L 25/08(2006.01)i

According to International Patent Classification (IPC) or to both national classification and IPC

### B. FIELDS SEARCHED

Minimum documentation searched (classification system followed by classification symbols)

H04W24/-, H04L5/-, H04L25/-

Documentation searched other than minimum documentation to the extent that such documents are included in the fields searched

Electronic data base consulted during the international search (name of data base and, where practicable, search terms used)

CNTXT: CNABS; CNTXT; CNKI; BAIDU: 感知信号, 感测信号, 基站, 节点, 网络设备, 网元, 指示, 配置, 参数, 端口, 干扰, 消除, 抑制, 降低, 减轻, 辅助干扰消除, 带内感测, 资源, 重叠; VEN; USTXT; EPTXT; WOTXT; IEEE; 3GPP: sensing, base station, gNB, eNB, nodeB, BTS, indicat+, configuration, parameter, port, interference, suppress, NAICS, in-band sensing, resource, overlap

### C. DOCUMENTS CONSIDERED TO BE RELEVANT

| Category* | Citation of document, with indication, where appropriate, of the relevant passages | Relevant to claim No. |
| --- | --- | --- |
| Y | US 2021076417 A1 (BAYESTEH ALIREZA et al.) 11 March 2021 (2021-03-11) description, paragraphs [0048] and [0167]-[0177] | 1-35 |
| Y | CN 105580433 A (TEXAS INSTRUMENTS INC.) 11 May 2016 (2016-05-11) description, paragraphs [0026]-[0047] | 1-35 |
| A | CN 111435856 A (CHENGDU HUAWEI TECHNOLOGIES CO., LTD.) 21 July 2020 (2020-07-21) entire document | 1-35 |
| A | CN 106031065 A (HUAWEI TECHNOLOGIES CO., LTD.) 12 October 2016 (2016-10-12) entire document | 1-35 |
| A | CN 109391403 A (NOKIA SHANGHAI BELL CO., LTD. et al.) 26 February 2019 (2019-02-26) entire document | 1-35 |
| A | WO 2019203609 A1 (LG ELECTRONICS INC.) 24 October 2019 (2019-10-24) entire document | 1-35 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 October 2022** | **30 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/115331**

| Patent document cited in search report | | | Publication date (day/month/year) | Patent family member(s) | | | Publication date (day/month/year) |
|---|---|---|---|---|---|---|---|
| US | 2021076417 | A1 | 11 March 2021 | CN | 114303073 | A | 08 April 2022 |
| | | | | US | 2022030626 | A1 | 27 January 2022 |
| | | | | EP | 4022350 | A1 | 06 July 2022 |
| | | | | WO | 2021047284 | A1 | 18 March 2021 |
| CN | 105580433 | A | 11 May 2016 | JP | 2019149814 | A | 05 September 2019 |
| | | | | US | 2019334645 | A1 | 31 October 2019 |
| | | | | JP | 2016529761 | A | 23 September 2016 |
| | | | | CN | 112787746 | A | 11 May 2021 |
| | | | | US | 2022029725 | A1 | 27 January 2022 |
| | | | | JP | 2021073778 | A | 13 May 2021 |
| | | | | US | 2014362769 | A1 | 11 December 2014 |
| | | | | WO | 2014201078 | A1 | 18 December 2014 |
| CN | 111435856 | A | 21 July 2020 | WO | 2020143654 | A1 | 16 July 2020 |
| | | | | CN | 111435856 | B | 01 June 2021 |
| CN | 106031065 | A | 12 October 2016 | WO | 2016119240 | A1 | 04 August 2016 |
| | | | | JP | 2018505614 | A | 22 February 2018 |
| | | | | EP | 3249837 | A1 | 29 November 2017 |
| | | | | US | 2017331573 | A1 | 16 November 2017 |
| | | | | KR | 20170109015 | A | 27 September 2017 |
| | | | | VN | 54526 | A | 25 October 2017 |
| | | | | IN | 201727027630 | A | 10 November 2017 |
| | | | | EP | 3249837 | A4 | 21 February 2018 |
| | | | | CN | 106031065 | B | 14 June 2019 |
| CN | 109391403 | A | 26 February 2019 | CN | 109391403 | B | 06 July 2021 |
| WO | 2019203609 | A1 | 24 October 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111022394